# EUROPEAN PATENT APPLICATION

(11) **EP 2 045 770 A1**
(43) Date of publication of application: **08.04.2009**
(21) Application number: 07742950.4
(22) Date of filing: 08.05.2007
(51) Int. Cl.: G06Q 50/00, G05B 19/418

(54) **QUALITY CONTROL SYSTEM, QUALITY CONTROL PROGRAM, AND CLIENT DEVICE**

(30) Priority: 13.07.2006 JP 2006193060
(71) Applicant: QualiTech, Inc., Tokyo 116-0013 (JP); Ishii, Tatsuhisa, Nagoya-shi, Aichi 460-0014 (JP)
(72) Inventor: ISHII, Tatsuhisa, Nagoya-shi, Aichi 460-0014 (JP); FUKUOKA, Hirobumi, Tokyo 116-0013 (JP)
(74) Representative: Betten & Resch
(86) International application number: PCT/JP2007/059515
(87) International publication number: WO 2008/007493

(57) **Abstract**

A quality control system comprises servers connected to companies having different quality control in-house systems and interconnected through networks and client devices operated by quality control managers belonging to the respective companies. In this quality control system, when the client device of one company logs in a server, according to the definition of the one company as a master and the definition of the customer company (step S1), definition of QPP data including quality information of the one company, product structure information, and production process information (step S2), definition of association of the QPP data of the one company and the customer company (step S3), and integration of the information defined at steps S2, S3 (step S4), a quality control information chain linking the companies is formed. Such a quality control system enables construction of information cooperation chain linking companies having a high transparency for quality control and can solves all the existing problems of the quality control.

## Description

### Technical Field

The present invention relates to a quality control system and a quality control program, which control the quality of an object subject to quality control, and a client device employed by the quality control system.

### Background Art

In the manufacturing industries of vehicles, machines, and electrical parts, with inter-company low-cost competition, global production, and short-term achievement of high-performance electronic devices, a supply chain as a path for part procurement becomes complicated and unclear.

The quality demanded by customers pervade extensively throughout a life cycle of a product, including safety, environmental conservation, and recycling methods. For this reason, a failure in quality control of a company may cause a risk of management, and thus there is a need for a quality control method that is able to be effectively and easily introduced to meet the actual production condition.

There rarely exists a company that can produce materials and finished products in-house. That is, most of finished product manufacturers (final assembly manufacturers) obtain most of parts including important parts from external sources, and part supply manufacturers (suppliers) that directly deliver parts to the finished product manufacturers also obtain parts or materials globally through a complex supply chain.

Companies, which are linked with each other through such a supply chain, have different quality control systems. For this reason, the finished product manufacturers, which handle the finished products, face a difficult situation where the causal relationship involved in quality problems, such as product quality or quality factors, may not be accurately grasped. As a result, the manufacturing industries undergo the following problems.

First, in the manufacturing industries, if a factory is located overseas, the factory obtains parts on site. In the on-site part procurement, however, a variation in quality by area may occur.

Second, in the manufacturing industries, in terms of reduction in cost, there is an obscure situation in which a superordinate manufacturer may not have a grasp a procurement source, which delivers parts to a subordinate part supply manufacturer.

Third, in the manufacturing industries, the parts are delivered along a supply chain linking several manufacturers in different tiers, for example, a supply chain linking a superordinate finished product manufacturer and subordinate part supply manufacturers, but preferential item information regarding quality may not be clearly transferred between the manufacturers in different tiers.

For this reason, the quality control of the finished product manufacturer involves a lot of risk of occurrence of defective products, which potentially affects the widespread lineup.

Patent Document 1 discloses a technique that grasps the causal relationship of quality problems due to a difference in data management system by part or the like.

Patent Document 1: Japanese Patent Application Laid-Open No. 2005-327024

Specifically, Patent Document 1 discloses a data mining system that is configured to consistently manage quality information during product development and quality information during a manufacturing process. In the data mining system, steps and parts are applied with management numbers, and when the parts are processed in the manufacturing process, the step numbers or quality data are registered in association with part lot numbers. When the parts are combined, master part lot numbers and slave part lot numbers are registered in association with each other. In a processing database, quality data which is associated with the slave part lot numbers till then is associated with the master part lot numbers, and a data mining processing is performed on data. In this way, the data mining system is configured to unify quality information regarding a main body and slave parts in different control systems in real time, and to instantaneously extract the causes of defectives from quality information of parts of the previous processes when defectives occur in the main body. Therefore, it may be possible to shorten a lead time from when defectives occur until quality is improved.

The quality control in the manufacturing industries is not a matter of closed data management in a company any longer, regardless of a finished product manufacturer or a part supply manufacturer.

In the related art, the systems that control a product structure, a production process, and product quality are individually constructed and managed, and accordingly, it is very difficult to integrate the product structure, the production process, and the product quality. This makes it difficult to trace the supply chain, and when any problem occurs, it takes a lot of time to specify the cause of the problem.

In the manufacturing industries, as described above, to manufacture one finished product, several manufacturers in different tiers are needed. In a multi-tiered supply chain including secondary suppliers, however, there is no scheme for tracing the chain over different companies.

The finished product manufacturer is responsible for product quality from a point of view of a user, but the finished product manufacturer is a final assembly manufacturer that is just at the top of the multi-tiered part supply chain, presents performance, specification, and quality with respect to the finished products, and obtains adequate parts from the part supply manufacturers.

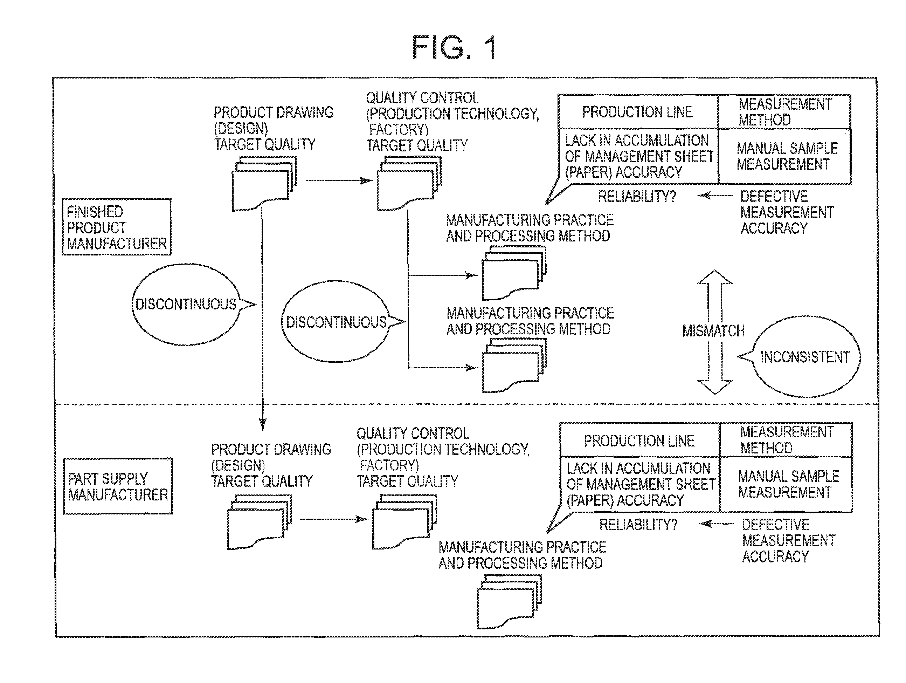

In order to solve the problems with the manufacturing industries, there is a need for an information system that shares and manages quality control information and know-how of the companies, which are linked with each other through the supply chain, beyond the bounds of the companies, and makes a quality control process transparent while the finished products are manufactured. Specifically, such an information system should cope with the following problems.
1) unsystematic quality control, for example, heavy personal dependence or paper recording
2) unclear quality level of parts to be globally delivered
3) a gap between a quality standard for a finished product and a quality standard for parts constituting the finished product
4) inaccurate understanding of quality problems
5) inconsistency and discontinuity of quality control methods in a finished product manufacturer and parts supply manufacturers, as shown in Fig. 1.

The invention has been finalized in consideration of the drawbacks inherent in the related art, and it is an object of the invention to provide a quality control system and a quality control program, which are capable of constructing an information cooperation chain having a high transparency for quality control and solving all the existing problems of the quality control, and a client device that is employed by the quality control system.

In order to achieve the above-described object, there is provided a quality control system according to the invention that controls quality of an object subject to quality control. The system includes a plurality of server devices that is individually provided in a plurality of activity units, which has different quality control systems and performs social activities, and is interconnected through a network, and a plurality of client devices that is terminals provided in each activity unit and is operated by a quality control manager belonging to the corresponding activity unit. The server device and the client devices provided in each activity unit are loosely connected to each other. Each of the client devices includes a display unit that displays various kinds of information, a first association unit that, in accordance with an operation by a quality control manager belonging to one activity unit, in which the corresponding client device is provided, through a screen displayed on the display unit, defines and associates quality information including quality control items of the object subject to quality control, structure information regarding the structure of the object subject to quality control, and process information regarding a process for the object subject to quality control in the one activity unit, a second association unit that, in accordance with an operation by the quality control manager belonging to the one activity unit through the screen displayed on the display unit, imports quality information and structure information, which are defined by a first association unit of another client device provided in another activity unit and stored in a server device connected to another client device as a database, in another activity unit, and associates the quality information and the structure information with the quality information and the structure information in the one activity unit, respectively, and a control unit that, in accordance with an operation by the quality control manager belonging to the one activity unit through the screen displayed on the display unit, controls the display unit to visually display an internal information cooperation chain indicating a relation between the quality information, the structure information, and the process information in the one activity unit defined and associated by the first association unit, and an external information cooperation chain indicating a relation between the quality information and the structure information in another activity unit and the quality information and the structure information in the one activity unit. The server device includes a storage unit that stores, as a database, a data group associated by the first association unit and the second association unit in the client device loosely connected to the server device.

In order to achieve the above-described object, there is provided a quality control program according to the invention that uses a server device employed by a quality control system for controlling quality of an object subject to quality control and is executed by a computer as a client device connected to the server device. The quality control system includes a plurality of server devices that is individually provided in a plurality of activity units, which has different quality control systems and performs social activities, and is interconnected through a network, and a plurality of client devices that is terminals provided in each activity unit and is operated by a quality control manager belonging to the corresponding activity unit. The server device and the client devices provided in each activity unit are loosely connected to each other. The program causes the computer to function as a first association unit that, in accordance with an operation by a quality control manager belonging to one activity unit, in which a corresponding client device is provided, through a screen displayed on a display unit, defines and associates quality information including quality control items of the object subject to quality control, structure information regarding the structure of the object subject to quality control, and process information regarding a process for the object subject to quality control in the one activity unit, a second association unit that, in accordance with an operation by the quality control manager belonging to the one activity unit through the screen displayed on the display unit, imports quality information and structure information, which are defined by a first association unit of another client device provided in another activity unit and stored in a server device connected to another client device as a database, in another activity unit, and associates the quality information and the structure information with the quality information and the structure information in the one activity unit, respectively, and a control unit that, in accordance with an operation by the quality control manager belonging to the one activity unit through the screen displayed on the display unit, controls the display unit to visually display an internal information cooperation chain indicating a relation between the quality information, the structure information, and the process information in the one activity unit defined and associated by the first association unit, and an external information cooperation chain indicating a relation between the quality information and the structure information in another activity unit and the quality information and the structure information in the one activity.

In order to achieve the above-described object, there is provided a client device according to the invention that is employed by a quality control system for controlling quality of an object subject to quality control. The quality control system includes a plurality of server devices that is individually provided in a plurality of activity units, which has different quality control systems and performs social activities, and is interconnected through a network, and a plurality of client devices that is terminals provided in each activity unit and is operated by a quality control manager belonging to the corresponding activity unit. The server device and the client devices provided in each activity unit are loosely connected to each other. The client device includes a display unit that displays various kinds of information, a first association unit that, in accordance with an operation by a quality control manager belonging to one activity unit, in which the client device is provided, through a screen displayed on the display unit, defines and associates quality information including quality control items of the object subject to quality control, structure information regarding the structure of the object subject to quality control, and process information regarding a process for the object subject to quality control in the one activity unit, a second association unit that, in accordance with an operation by the quality control manager belonging to the one activity unit through the screen displayed on the display unit, imports quality information and structure information, which are defined by a first association unit of another client device provided in another activity unit and stored in a server device connected to another client device as a database, in another activity unit, and associates the quality information and the structure information with the quality information and the structure information in the one activity unit, respectively, and a control unit that, in accordance with an operation by the quality control manager belonging to the one activity unit through the screen displayed on the display unit, controls the display unit to visually display an internal information cooperation chain indicating a relation between the quality information, the structure information, and the process information in the one activity unit defined and associated by the first association unit, and an external information cooperation chain indicating a relation between the quality information and the structure information in another activity unit and the quality information and the structure information in the one activity.

According to the quality control system, the quality control program, and the client device of the invention, quality control of activity units, which have different quality control systems and perform social activities, is defined as a relation between quality information, structure information, and process information. A quality control manager associates the quality control information between the quality control systems. Therefore, it is possible to form an information cooperation chain of quality control information while efficiently employing a quality control method unique to a quality control in-house system.

According to the invention, it is possible to form an information cooperation chain of quality control information while efficiently employing a quality control method unique to each quality control in-house system. As a result, it is possible to easily grasp how much various elements constituting an object subject to quality control affect as quality, and to allow the quality control information to be shared between the quality control systems.

### Brief Description of the Drawings

Fig. 1 is a diagram illustrating a condition where quality control methods in a finished product manufacturer and part supply manufacturers are inconsistent and discontinuous.
Fig. 2 is a diagram illustrating a condition where companies have individual management standards.
Fig. 3 is a diagram illustrating a QPP data model to be suggested by a quality control system according to an embodiment of the invention.
Fig. 4 is a diagram illustrating the structure of the quality control system.
Fig. 5 is a block diagram illustrating the structure of a server in the quality control system.
Fig. 6 is a flowchart illustrating a general procedure in the quality control system.
Fig. 7 is a diagram conceptually illustrating a condition where definition is performed through an execution screen, which is displayed a display section of a client device in the quality control system.
Fig. 8 is a diagram illustrating a specific example of a data definition screen, which is displayed on a display section of a client device in the quality control system.
Fig. 9 is a diagram illustrating a specific example of a data definition screen, which is displayed on a display section of a client device in the quality control system, and a condition where selected 3D diagram information is displayed.
Fig. 10 is a diagram illustrating a specific example of a data definition screen, which is displayed on a display section of a client device in the quality control system, and a condition where a part registration information subwindow is displayed.
Fig. 11 is a diagram illustrating a specific example of a data definition screen, which is displayed on a display section of a client device in the quality control system, and a condition where a part name in a product structure tree is dragged and dropped into a row of associated part table area.
Fig. 12 is a diagram illustrating a specific example of a data definition screen, which is displayed on a display section of a client device in the quality control system, and a condition where an attribute name described in a note and its value are added.
Fig. 13 is a diagram illustrating a specific example of a data definition screen, which is displayed on a display section of a client device in the quality control system, and a condition where a part name in a product structure tree is dragged and dropped into a box representing a step.
Fig. 14 is a diagram illustrating a specific example of a data definition screen, which is displayed on a display section of a client device in the quality control system, and a condition where all quality control items and all production steps associated with a selected part are highlighted.
Fig. 15 is a diagram conceptually illustrating a condition where QPP data of a customer company is imported and associated with quality properties, associated parts, quality control items, and supplemental information constituting QPP data of a company in the quality control system.
Fig. 16 is a diagram illustrating a specific example of an inter-company information definition screen, which is displayed on a display section of a client device in the quality control system.
Fig. 17 is a diagram illustrating a specific example of an inter-company information definition screen, which is displayed on a display section of a client device in the quality control system, and a condition where each item constituting quality information of a company is dragged and dropped into a corresponding one of items constituting quality information of a customer company.
Fig. 18 is a diagram illustrating a condition where a quality control information chain linking companies is formed in the quality control system.
Fig. 19 is a diagram illustrating a specific example of an inter-company information definition screen, which is displayed on a display section of a client device in the quality control system, and a condition where quality information of other companies associated with selected quality information of a company is highlighted,
Fig. 20 is a diagram illustrating a procedure of inter-company Q-Q and Pd-Pd association through a server in the quality control system.
Fig. 21 is a diagram illustrating a condition where a client device accesses a server of a customer company with access permitted.
Fig. 22 is a diagram illustrating the relationship of servers and client devices of four companies.
Fig. 23 is a diagram illustrating the relationship of a server and a client device when a part procurement relation is complex.

### Best Mode for Carrying Out the Invention

Hereinafter, a specific embodiment of the invention will be described in detail with reference to the drawings.

This embodiment provides a quality control system that controls quality of an object subject to quality control. In particular, the quality control system defines quality control of activity units, which have different quality control systems and perform social activities, according to the relation between quality information (Quality; Q) including quality control items of the object subject to quality control in one activity unit, structure information (Product; Pd) regarding the structure of the object subject to quality control, and process information (Process; Ps) regarding a process for the object subject to quality control. A quality control manager associates quality control information between the quality control systems through Internet. Therefore, the quality control system is constructed as a distributed, cooperative Web system that is capable of forming a quality control information chain while efficiently employing a quality control method unique to each quality control in-house system.

For convenience of explanation, it is assumed that the activity unit is a company, and the object subject to quality control is a product and/or a part to be produced by the company. In addition, the quality information is quality information including quality control items of the product and/or the part to be produced by the company, the structure information is product structure information regarding constituent elements of the product and/or the part to be produced by the company, and the process information is production process information regarding a production process for the product and/or the part to be produced by the company.

The reason why a distributed, cooperative Web system is used is as follows.

A social infrastructure that supports a complex supply chain and real-time electronic commercial transactions includes Internet and high-performance personal computers. In a field of quality control, however, such an infrastructure is not sufficiently utilized. This is because the quality control information does not include traditional factors in the inter-company distribution, such as commercial goods or money.

The inventors have considered that if the manufacturers exchange quality control information beyond the bounds of the companies and associate the quality control information, the causal relationship of quality becomes transparent. The inventors have also considered that if a dispersed, cooperative Web system, which efficiently employs merits of a centralized control and a distributed processing by a system comprised of communication and computers, is introduced, a widespread risk beyond the bounds of the companies due to a failure in quality control is reduced, without sacrificing the identity of each company.

A most advanced Web system is called a rich client system, in which a general personal computer directly accesses various servers on Internet. With this function, a client device of a quality control manager belonging to a company directly accesses a server, in which quality control data of a customer is stored, quantitatively and qualitatively associates quality control information, and accumulates relation information on the basis of the association. In this way, a quality control information chain linking the companies is formed, and thus it is possible to grasp how much various parts constituting a finished product affect as quality. In particular, a quality control system that the invention is going to provide needs to be implemented, without sacrificing the identity of each company and imposing on a company server as a node of cooperation on Internet. This is because the quality control system of the invention is applied to a global production and sales network in the manufacturing or to a complex and unclear supply chain in the distribution.

Introduction of such a distributed, cooperative Web system does not promote resolution of quality control problems. This is because it is impossible to shake off the concept of unreasonable unification and integration as an attempt to grasp and manage all parts put into the production process in each company from an internal viewpoint.

For this reason, construction of a system as a receiver of quality control information not conforming to an in-house system behind parts to be supplied from external part supply manufacturers has been overlooked. Even if it was understood that there is a limit in a quality control method from a point of view of in-house central control, it is difficult to establish an effective method that breaks down the limit, and to introduce the method in a cross-company manner.

Internet, which has been explosively developed from the mid-1990s, realizes electronic commercial transactions (e-commerce), and recently, product distribution or financial transactions are performed with a prerequisite of information exchange through Internet. An infrastructure of a Web system is provided in many companies, and supply chain management (SCM) is established as a general physical distribution management method. The problems of quality control are neither the only inevitable reasons nor technical obstacles that are within the bounds of the companies.

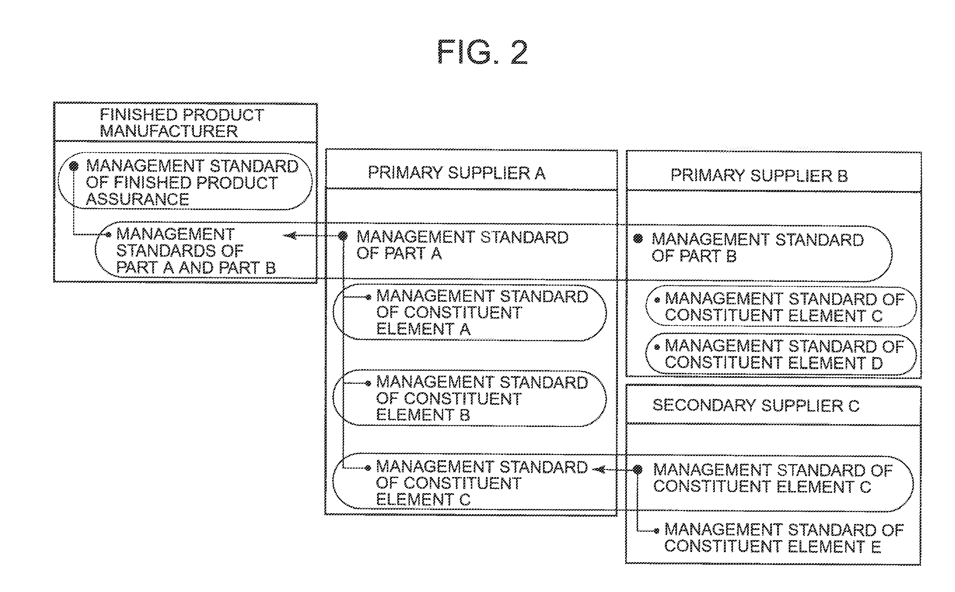

A finished product manufacturer that is responsible for quality of a finished product and gives a customer a quality assurance decides a management standard (dimension, weight, material, voltage, and the like) for finished product assurance, as shown in Fig. 2, presents the control standard to the part supply manufacturers, and obtains parts according to the management standard. Meanwhile, each part supply manufacturer has a part performance standard, in addition to the management standard for finished product assurance. When the part supply manufacturers are linked with each other in a multi-tiered manner to supply constituent elements, many constituent elements having a performance standard, which is not defined in the management standard for finished product assurance, may be assembled into a finished product.

In the supply chain management, the implementation of unwasteful and rapid supply to demand was primarily constructed as a physical distribution system and an information system from a point of view of a supply side. In order to solve the quality problems, it is necessary to form a quality control information chain that ensures an inverse trace of a supply chain from the finished product manufacturer, which gives finished product assurance, to primary suppliers and secondary suppliers in that order. When quality control information is associated to form a chain, a supply side associates quality control information of its own with quality control information of a procurement side, and promotes refinement and intension. The performance information or description information as know-how other than the management standard may be associated as quality control information, and association of constituent elements to be delivered by the suppliers may also be described. In this way, it is possible to form an accurate quality control information chain. If the quality of the finished product is regarded as the entire quality, the suppliers are burdened with partial quality. The partial quality is provided as quality control information of a company between other distributed companies. For this reason, unless association is positively performed between the companies, the role or ranking in the entire quality and its degree of effect become unclear. In addition, the finished product manufacturer and the part supply manufacturers are separate companies, and accordingly quality control methods, parts lists (Bill of Materials (BOM)), and production process control systems are all different.

With a prerequisite of information distribution by the companies and inconsistency or discontinuity of systems, in order to form a quality control information chain linking the companies, there is a need for a method that forms an information cooperation chain of partial quality with respect to entire quality, without sacrificing the identity of quality control of the individual companies and newly constructing a fixed large integrated system. In other words, what is important is a new scheme that does not uniformly manage information regarding quality control items, a product structure, and a production process constructed by a finished product manufacturer or a part supply manufacturer by unreasonably applying a common rule.

The quality control system according to an embodiment of the invention realizes a method for resolution of problems with respect to new quality. With a technique for a new Web system, the quality control system is trying to improve the management productivity of a quality control manager and access servers of a company and a plurality of associated companies, thereby forming an information cooperation chain having a high transparency for quality control and solving all the existing problems of the quality control.

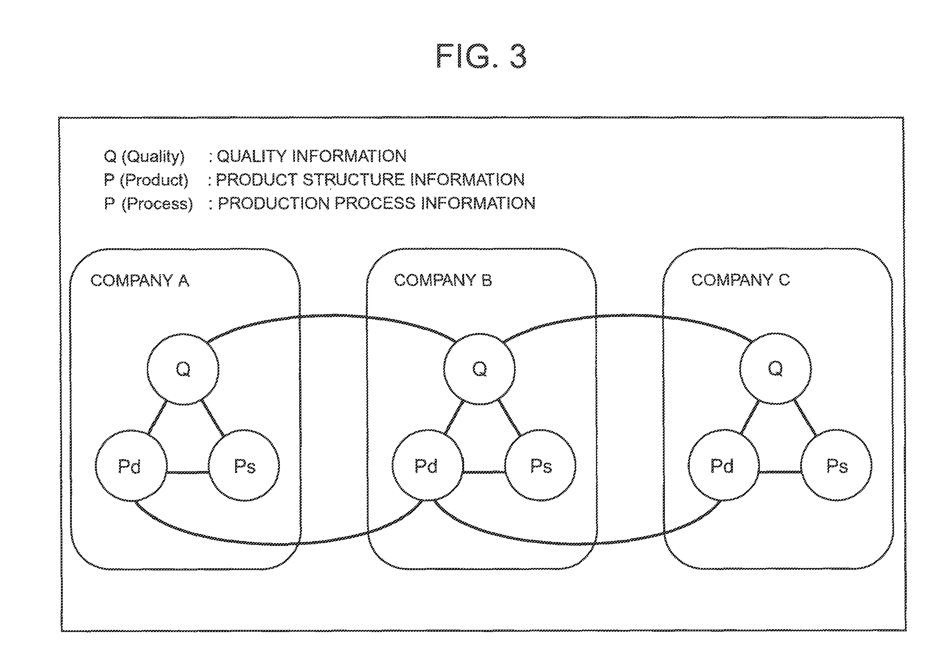

This quality control system is constructed with the following requisites.
1) The quality control system is a distributed, cooperative system based on Internet communication.
2) The quality control system is a Web application system that a quality control manager belonging to each company operates as a client device.
3) Each company participating in the quality control system generates and manages only partial information regarding the company and surroundings.
4) In the quality control system, a client device of a company directly accesses a permitted server of the company or other companies and connects necessary data to integrate as a single application.
5) Quality control items or 3D diagram information associated in a product unit is stored in a database for the quality control system.
6) As shown in Fig. 3, quality control information, which is handled by the quality control system, is systematized as a data model (hereinafter, if necessary, referred to as a QPP data model) having three elements, that is, quality information (Q) including quality control items, product structure information (Pd) regarding constituent elements of a product, and production process information (Ps) regarding a production process of a product. The relation between quality information, product structure information, and production process information of a company is defined by QPP data, and the relation between inter-company quality information and product structure information is defined by QPP data.
7) In the quality control system, inter-company quality control information is shared by QPP data.
8) In the quality control system, a supply chain is traced in upstream and downstream directions, and inter-company quality control cooperation is confirmed.
9) In the quality control system, QPP data is accumulated, and accordingly, causes for occurrence of defectives, parts causing the defectives, and the effect of quality control items are grasped.

This quality control system introduces a new concept of a QPP data model, and forms a quality control information chain of inter-company cooperation for actual quality control that is capable of coping with global production.

The quality control information chain is described in a general XML (eXtensible Markup Language) for communication with a finished product manufacturer and a plurality of part supply manufacturers, which is arranged in a multi-tiered manner and changed as needed. The quality control system is constructed as a rich client Web system with a prerequisite of connection having a high degree of freedom from servers on Internet and a low communication load between a line and a server.

The quality control system has a function to describe discontinuity of QPP data distributed and written in the company servers, and a function to display 3D diagram information of parts according to design data.

The quality control system is constructed as a distributed, cooperative system that is capable of predicting design quality of a finished product manufacturer, a failure due to accumulation of a quality tolerance of actually assembled parts, and a range of effect of the failure, and freely searching quality-product cooperation between companies or factories through Internet in order to execute a precaution or preliminary countermeasure in a global and cross-company manner.

The specific structure of the quality control system will now be described.

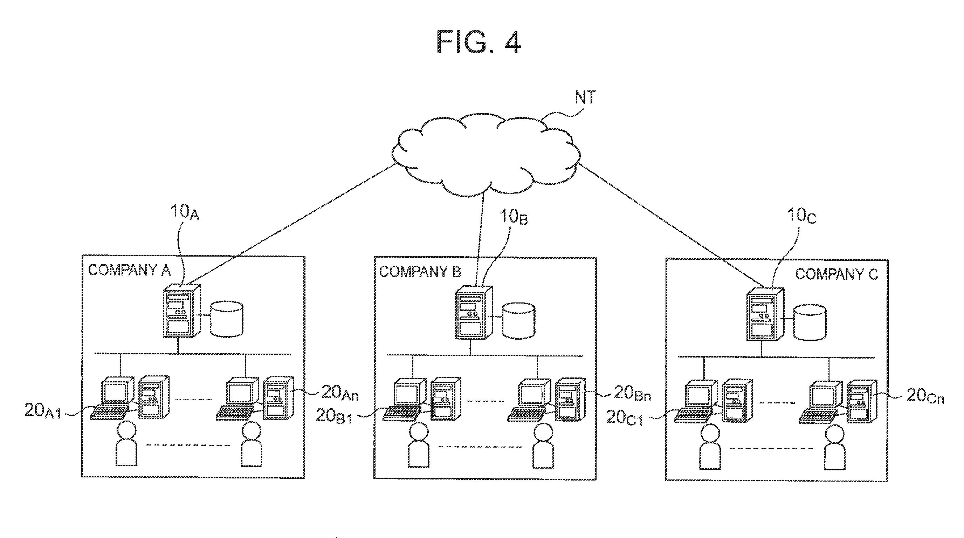

As shown in Fig. 4, in the quality control system, an in-house network of each of companies (companies A, B, and C) participating in the quality control system, regardless of a finished product manufacturer or a part supply manufacturer, is connected to a network NT including Internet In Fig. 4, for convenience of explanation, the in-house networks of the three companies, that is, the companies A, B, and C, exist. In the quality control system, however, the number of in-house networks is not limited, but an in-house network of a finished product manufacturer and in-house networks of a plurality of superordinate and subordinate suppliers are connected.

The in-house network of each company includes a server 10 that is connected to the network NT, and at least one client device 20 that is operated by a quality control manager who belongs to the company. In Fig. 4, the server of the company A is called a server 10_{A}, the server of the company B is called a server 10_{B}, and the server of the company C is called a server 10_{C}. The servers 10_{A}, 10_{B}, 10_{C} have the same structure, regardless of a finished product manufacturer or a part supply manufacturer. In the following description, for convenience, the servers 10_{A}, 10_{B}, 10_{C} are collectively called as servers 10 unless they are not particularly distinguished from each other. In Fig. 4, the client devices of the company A are called as client devices 20_{A1}, ..., and 20_{An}, the client device of the company B are called as client devices 20_{B1}, ..., and 20_{Bn}, and the client device of the company C are called as client devices 20_{C1}, ..., and 20_{Cn}. The client devices 20_{A1}, ..., and 20_{An}, 20_{B1}, ..., and 20_{Bn}, and 20_{C1}, ..., and 20_{Cn} have the same functional structure, regardless of a finished product manufacturer or a part supply manufacturer. In the following description, for convenience, the client devices 20_{A1}, ..., and 20_{An}, 20_{B1}, ..., and 20_{Bn}, and 20_{C1}, ..., and 20_{Cn} are collectively called client devices 20 unless they are not particularly distinguished from each other.

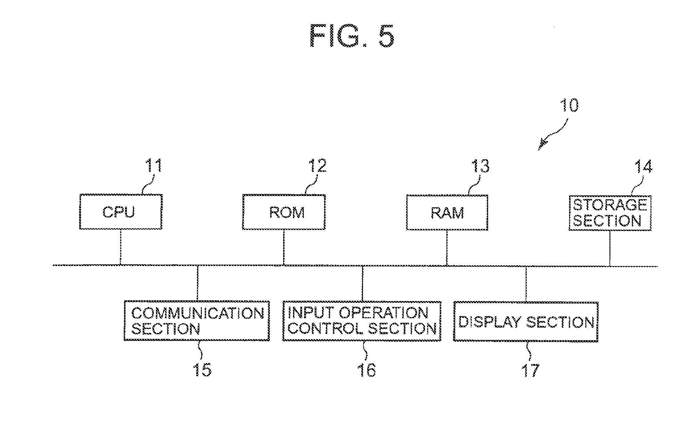

Each server 10 is a Web server that is managed by each company participating in the quality control system, and is capable of transmitting and receiving data to and from the servers of other companies through the network NT. As shown in Fig. 5, the server 10 includes a CPU (Central Processing Unit) 11 that overall controls the individual sections, a ROM (Read Only Memory) 12 for read only that stores various kinds of information including various programs, a RAM (Random Access Memory) 13 that functions as a work area, a storage section 14 that readably and/or writably stores various kinds of information, a communication section 15 that is connected to the network NT to perform communication, an input operation control section 16 that processes and controls an input operation through an operating device (not shown) as a user interface, and a display section 17 that functions as a display unit for displaying various kinds of information.

The CPU 11 executes various programs, which are stored in the storage section 14, and overall controls the individual sections.

The ROM 12 stores various kinds of information including various programs. Information stored in the ROM 12 is read out under the control of the CPU 11.

The RAM 13 functions as a work area when the CPU 11 executes various programs, and temporarily stores and outputs various kinds of information under the control of the CPU 11.

The storage section 14 stores various programs including a rich client Web application program (quality control program) for implementing the quality control system, or various kinds of information including various kinds of image data or sound data. The storage section 14 also stores partial information including quality control items regarding a company and surroundings as a database. In this case, the storage section 14 does not store partial information regarding other companies. The storage section 14 is formed by a storage device, such as a hard disk or a device of a RAID (Redundant Arrays of Independent (Inexpensive) Disks) structure, in which a plurality of hard disks. Information stored in the storage section 14 is read out under the control of the CPU 11.

The communication section 15 is an interface for connection to the network NT based on a network line, such as an analog line, Ethernet (Registered Trademark)-linked LAN (Local Area Network), ISDN (Integrated Services Digital Network), ADSL (Asymmetric Digital Subscriber Line), or FTTH (Fiber To The Home), a wireless communication method, such as wireless LAN based on IEEE (Institute of Electrical and Electronic Engineers) 802.11 or Bluetooth (Registered Trademark), a W-CDMA (Wideband-Code Division Multiple Access) method, such as FOMA (Registered Trademark), or an a CDMA-2000 method, such as HDR (High Data Rate). The communication section 15 performs communication with the outside under the control of the CPU 11.

The input operation control section 16 receives an input operation through an operating device (not shown) as a user interface, such as a keyboard, a mouse, a keypad, an infrared remote controller, a stick key, or a push button, and supplies a control signal indicating an operation to the CPU 11.

The display section 17 is a display device, such as a liquid crystal display (LCD), a plasma display panel (PDP), an organic electroluminescent display, or a CRT (Cathode Ray Tube). The display section 17 displays various kinds of image data or various kinds of information under the control of the CPU 11. For example, the display section 17 displays a screen on which a quality control manager performs maintenance.

The server 10 receives information input by the quality control manager through the client device 20, which is connected to the in-house network, and stores information including quality control items regarding a company and surroundings as a database, which will be described below in detail, thereby storing data associated with QPP data required for a quality control information chain. When there is an existing database, in which information regarding production or quality including the BOM is accumulated, the server 10 is configured to import data from the existing database. The server 10 also stores the source code of the quality control program in the storage section 14, and transmits the source code to the client device 20 in response to a request from the client device 20.

The client device 20 is a terminal, such as a personal computer, a mobile phone, or a personal digital assistant (PDA), and is operated by the quality control manager of each company participating in the quality control system. Specifically, similarly to the server 10, the client device 20 physically includes the individual sections shown in Fig. 5. The storage section 14 includes a hard disk or a nonvolatile memory, unlike the storage section 14 of the server 10. The storage section 14 includes a drive device that reads out and writes various kinds of information with respect to a storage medium, such as a CD-R or a memory card, which is detachably mounted in the main body.

Among the sections constituting the client device 20, the CPU 11 executes the quality control program and, as will be described below, functions as a first association unit that, in accordance with an operation by a quality control manager belonging to one company, in which the client device 20 is provided, through a screen displayed on the display section 17, defines and associates quality information, product structure information, and production process information in the one company. The CPU 11 also executes the quality control program and functions as a second association unit that, in accordance with an operation by the quality control manager belonging to the one company through the screen displayed on the display section 17, imports quality information and structure information of another company, which are defined by the first association unit in another client device provided in another company and stored in a server connected to another client device as a database, and associates the quality information and the structure information with the quality information and the structure information of the one company, respectively. The CPU 11 also executes the quality control program, and functions as a control unit that, in accordance with an operation by the quality control manager belonging to the one company through the screen displayed on the display section 17, controls the display section 17 to visually display an internal information cooperation chain indicating the relation between the quality information, the structure information, and the process information defined and associated by the first association unit, and an external information cooperation chain indicating the relation between the quality information and the structure information of another company, and the quality information and the structure information of the one company.

The client device 20 including the individual sections described above activates a browser application program in accordance with an operation of the quality control manager to access the server 10, and download the source code of the quality control program from the server 10. The client device 20 instantaneously complies the downloaded source code in a format of an execution file in accordance with an operation of the quality control manager, and controls the display section 17 to display a screen of the quality control program. If information including quality control items of the one company and surrounds is input by the quality control manager through the screen displayed on the display section 17 in the client device 20, as will be described below, the client device 20 adds or change information, stores the updated information in the server 10, and controls the display section 17 to display the state of the quality control information chain, such that the quality control manager reads the quality control information.

In the quality control system including the servers 10 and the client devices 20, the quality control in-house system is modeled by QPP data. That is, in the quality control system, the quality control in-house system is modeled by using the three elements, that is, the quality information (Q), the product structure information (Pd), and the production process information (Ps). The quality information (Q) is affected by a part group (Pd) constituting the product, and a production process (Ps) for processing or assembling the part group (Ps). Therefore, in the quality control system, the three elements are associated with data as an attribute of each of the three elements, thereby constructing the quality control in-house system. In addition, in the quality control system, cost or time is given as a part of the attribute, thereby performing linking and visualization with respect to cost, time (delivery data), and quality.

QPP data includes quality information (Q) including quality control items, classification information, associated parts, and supplemental information with a central focus, product structure information (Pd) including parts in a product structure tree described below, 3D diagram information representing the shape of each part in the format of XVL (extensible Virtual world description Language) file, information regarding a part supply manufacturer, and supplemental information, and production process information (Ps) regarding a process for producing a product. Of these, the product structure information and the production process information are mainly extracted from the BOM or external information on the basis of an operation of the client device 20 and sent to the server 10. The 3D diagram information is given to the server 10 from design information. In the quality control system, in regards to one quality characteristic, the associated parts are associated to all the matters, which affect the quality characteristic, on the basis of an operation of the client device 20. The associated parts are associated, regardless of companies, and the number of associated parts is not limited. As the quality control items for defining the quality of the associated parts, various kinds of data for quality control, for example, numeric values, such as size, weight, material, and electrical characteristics, tolerance, durable time, safety, preservation condition, presence/absence of noble metal or poisonous material, and legal collection responsibility. The supplemental information includes additional information of concern, and information regarding description of an address of a storage location of production result, data.

In the quality control system, when associating quality control information of a product of one company with quality control information of a product of a customer company, with association of a product (part) constituting a part of a product of the customer company as a start point, quality characteristics defined by the customer company are associated with quality characteristics of the one company or the quality control items are associated on the basis of an operation of the client device 20. In this case, a plurality of parts or quality characteristics may be associated with a single quality characteristic of the customer company. In the quality control system, a part group associated with each other is transmitted to the server 10 that is connected to the client device 20, which associates the part groups, and is stored in the server 10 as a database. QPP data stored in the server 10 in such a manner is read and searched by an authorized quality control manager of the customer company through the client device 20.

An operation and a processing in the quality control system will be described in connection with a specific screen.

The client device 20 activates the browser application program in accordance with an operation of the quality control manager to display a browser screen on the display section 17, and transmits an instruction to download the source code of the quality control program to the server 10. Accordingly, the client device 20 downloads the source code of the quality control program from the server 10, instantaneously compiles the source code in the format of an execution file, executes the execution file, and displays a start screen on the display section 17. The client device 20 displays various execution screens described below on the display section 17 when the quality control manager inputs a unique ID and a password on the start screen, and a login operation is performed. In the quality control system, various kinds of data for forming the quality control information are defined through the execution screens.

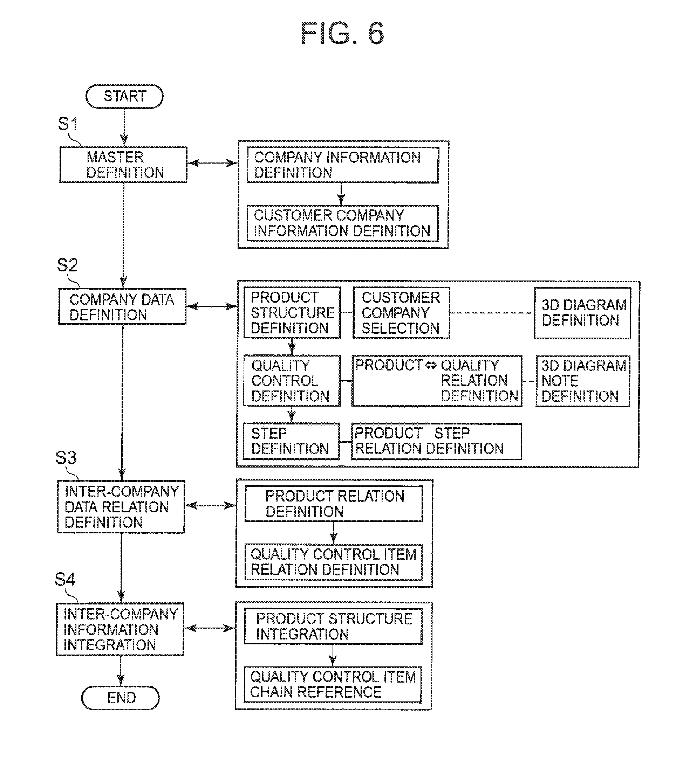

In the quality control system, if the client device 20 executes the quality control program in the above-described manner, as shown in Fig. 6, according to definition of the one company as a master and the customer company (Step S1), definition of QPP data of the one company (Step S2), definition of association of QPP data of the one company and the customer company (Step S3), and integration of information defined in Steps S2 and S3 (Step S4), the quality control information chain linking the companies is formed.

First, master definition in Step S will be described.

Though not particularly shown, if the quality control manager selects a master definition menu from among the menus of an execution screen displayed on the display section 17 of the client device 20, master definition is performed. Specifically, when a company information definition menu is selected from among the master definition menus, the client device 20 displays a popup screen for company information input on the display section 17. The quality control manager inputs information, such as a company name or a URL (Uniform Resource Locator) of the server 10, through the popup screen. When a customer company information definition menu is selected from among the master definition menus, the client device 20 displays an input screen for customer company information input on the display section 17. For each customer company, the quality control manager inputs information, such as a name, a URL of the server 10, or the type of the customer company indicating whether the customer company is a part supply manufacturer or a manufacturer as a delivery destination, through the input screen.

In the quality control system, the company information and the customer company information defined in such a manner are stored in the server 10, and thus it is possible to associate QPP data of the company information and the customer company information defined.

Subsequently, definition of QPP data of a company in Step S2 of Fig. 6 will be described.

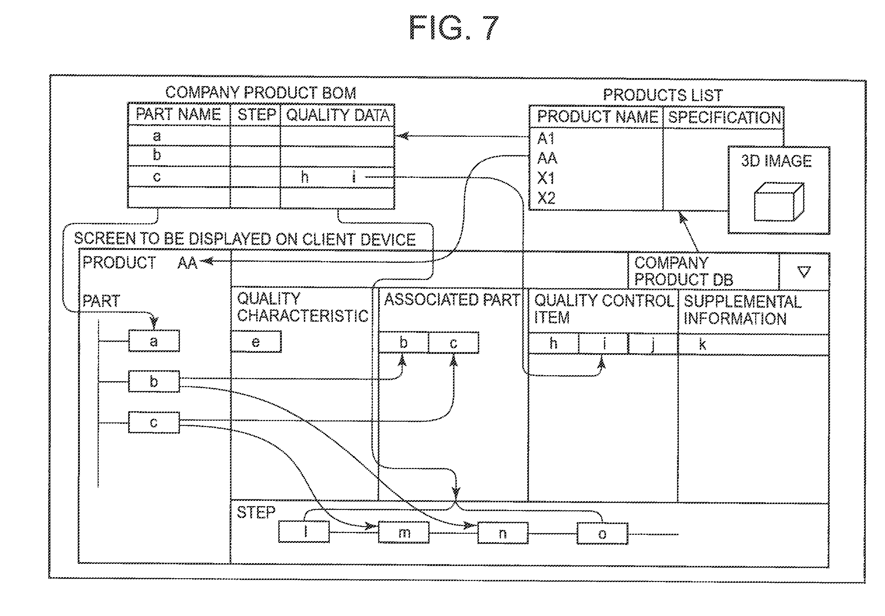

In the quality control system, a part group constituting a product (finished product) is specified by numbers registered in an item master, and is expanded to a product structure tree as a parts list (hierarchical BOM), In the product structure tree, self-manufactured parts and purchased parts are mixedly displayed. Fig. 7 conceptually illustrates a condition where the client device 20 imports information including quality control items from a company products list or a company product BOM to the execution screen displayed on the display section 17, and definition is performed through the execution screen. That is, in the quality control system, QPP data is visually displayed on the display section 17 of the client device 20 on the basis of data imported from the company products list or the company product BOM.

Product quality is realized by a plurality of quality characteristics. A single quality characteristic is defined by a plurality of associated parts, a plurality of quality control items of the parts, and a plurality of supplemental information, In the quality control system, as the supplemental information, for example, production result data, such as the weight, dimension, and pressure, for every serial number may be stored. The use of the supplemental information for a statistical processing in the quality control or quality improvement enables quality analysis over the companies. As described above, the parts include self-manufactured parts and purchased parts, and accordingly, accurate and sufficient quality definition may not be performed only with the quality characteristics, the quality control items, and the supplemental information from a viewpoint of a finished product manufacturer. As another element that affects the quality characteristics, production process information that represents an operation procedure or a parallel processing and includes a jig, a tool, and a subsidiary material is exemplified. In a production process, elements, such as equipment, a degree of proficiency of a worker, inventory management, and a lead time, determines quality, but the elements are rarely shared by the companies and include much quantitative know-how. For this reason, in the quality control system, the production process information is indirect information, which is converted into information for defining quality or supplemental information, and is included in the quality control information chain. For the purpose of demands for cause search, confirmation, permission, and adjustment by the quality control information chain, the production process information includes a linkage that supports a product-quality linkage between the companies at a company or a factory, or a specific department or a production line.

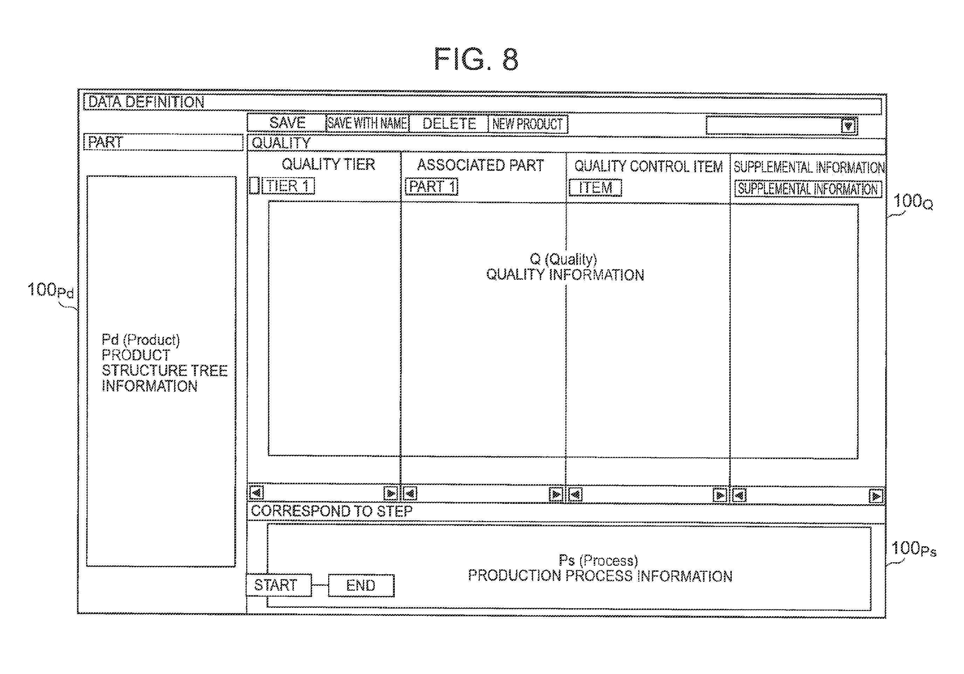

Specifically, in the quality control system, as a data definition screen for defining QPP data, as shown in Fig. 8, an execution screen, which has three data display areas 100_{Q}, 100_{Pd}, and 100_{Ps} corresponding to quality information (Q), product structure information (Pd), and production process information (Ps), is displayed on the display section 17 of the client device 20.

A data display area 100_{Pd} is used to associate parts constituting a product with a tree structure. A data display area 100_{Q} for displaying the quality information is divided into four table areas including a quality tier table area, in which quality characteristics are described in a multi-tiered manner, an associated part table area, in which the associated parts corresponding to the quality characteristics are described, a quality control item table area, in which attributes attached to the quality characteristics or the associated parts are described, and a supplemental information table area, in which supplemental information is described. The data display area 100_{Q} forms the core of the data definition screen. In a data display area 100_{Ps} for displaying the production process information, boxes with line information or step names input are connected in parallel to each other, thereby displaying a series of production steps.
The areas may be changed in size by a drag operation.

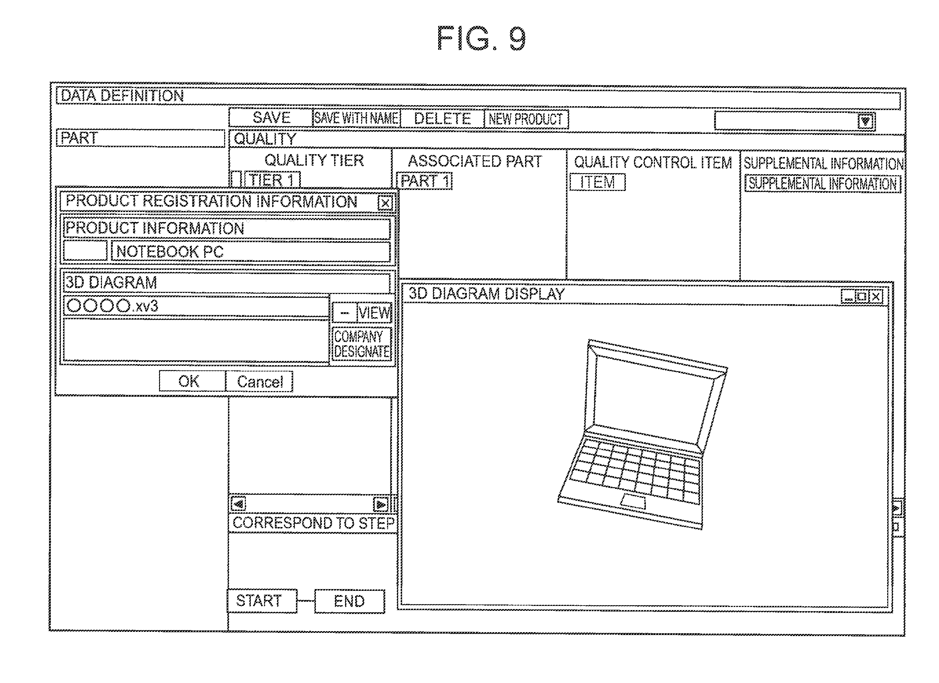

First, in the quality control system, in defining the product structure information of QPP data, when existing product information is extracted from a database of a company, the quality control manager selects a desired product from a menu provided in the data definition screen on the client device 20. Accordingly, the client device 20 displays the name or number of the selected product on the data definition screen. In defining information of a new product, if the quality control manager clicks a new product button provided in the data definition screen on the client device 20, the client device 20 clears the contents of the data definition screen, displays a product registration information subwindow on the display section 17 of the client device 20, and inputs necessary information in the input box. In addition, when an operation to change the product name or product number is executed, the client device 20 displays the product registration information subwindow on the display section 17 of the client device 20, and inputs necessary information in the input box. The client device 20 is able to designate a file of 3D diagram information of the product through the product registration information subwindow. That is, if the quality control manager operates a 3D diagram information selection section provided in the product registration information subwindow to select a file of desired 3D diagram information, the client device 20 displays the name of the selected file in the 3D diagram information selection section. In this way, when the 3D diagram information is selected, if a view button provided in the 3D diagram information selection section is operated, the client device 20 reads outs the file, and as shown in Fig. 9, displays the 3D diagram information of the product on the display section 17 of the client device 20. In the quality control system, when a product is a product of another product, a manufacturer of the product is designated through the product registration information subwindow.

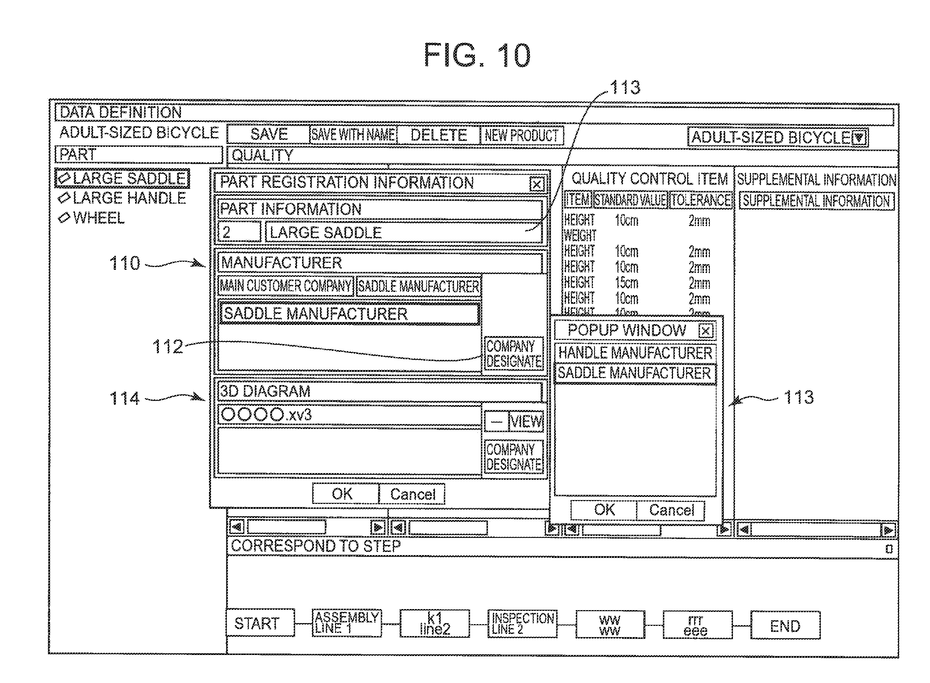

In the quality control system, if information of the product is defined, information regarding parts constituting the product is defined, thereby defining the product structure information. First, if the quality control manager right clicks a background area of the data display area 100_{Pd}, and selects a part addition menu from the menu, the client device 20 displays a popup screen for inputting a part name on the display section 17 of the client device 20, and inputs the part name. Accordingly, the client device 20 displays the input part name in the data display area. 100_{Pd}. If the part name displayed in the data display area 100_{Pd} is right clicked, and the part registration information is selected, as shown in Fig. 10, the client device 20 displays a part registration information subwindow 110 on the display section 17 of the client device 20. The quality control manager inputs the part name or part number in an input box 111 of the part registration information subwindow 110. Fig, 10 illustrates a condition where a part name "large saddle" is input. If a company designation button 112 is clicked, the client device 20 displays a popup screen 113, on which registered customer companies are listed, on the display section 17 of the client device 20. If one of the registered customer companies is selected as a part supply manufacturer, which supplies the part, the client device 20 displays the selected part supply manufacturer. Fig. 10 illustrates a condition where a part supply manufacturer as a "swaddle manufacturer" is selected. If the quality control manager operates a 3D diagram information selection section 114 of the part registration information subwindow 110 to select a file of desired 3D diagram information, the client device 20 displays the name of the selected file in the 3D diagram information selection section 114. When 3D diagram information is selected, if the quality control manager operates a view button provided in the 3D diagram information selection section 114, the client device 20 reads outs the file, and as shown in Fig. 9, displays the 3D diagram information of the part on the display section 17 of the client device 20.

In the quality control system, such an operation is repeatedly executed for all the parts. Therefore, in the data display area 100_{Pd}, self-manufactured parts and purchased parts are mixedly displayed, and a product structure tree in which primary constituent elements and secondary or later constituent elements are arranged in a tree is displayed. In the quality control system, it is not necessary to register the part name and the part registration information simultaneously. In regards to the part registration information, the part registration information subwindow 110 may be opened and a manufacturer or 3D diagram information may be designated.

In the quality control system, if the product structure information (Pd) is defined in the above-described manner, the quality information (Q) is defined. Single quality information is defined for every row over the four table areas, and one row includes quality characteristic, associated part, quality control item, and supplemental information. First, if the quality control manager right clicks a background area of the data display area 100_{Q}, the client device 20 adds a row for defining new quality information. At this time, the quality control system is configured to describe quality information by using the note of the 3D diagram information. That is, the client device 20 displays, on display section 17, a dialog for inquiring whether or not to describe quality information by using 3D diagram information, and causes the quality control manager to select whether or not to describe quality information. The description of the quality information by using the note of the 3D diagram information will be described below.

The quality control system is expanded while focusing on the quality information. In the quality characteristic, the quality categories required for a product are arranged in a multi-tiered manner. The quality characteristic becomes the start point of the quality control information chain. The quality characteristic arranges the categories in a multi-tiered manner, and a way to arrange the categories is arbitrarily selected. In defining the quality characteristic, if the quality control manager right clicks a row in the product tier table area to select an edition menu to be displayed, the client device 20 causes the quality control manage to input the name of the quality characteristic, for example, "operationality". If the quality control manager right clicks a row in the quality tier table area to select an addition menu to be displayed, the client device 20 adds another quality characteristic, for example, "response speed", At this time, when a predefined quality characteristic is present, the quality control manager may select whether to add another quality characteristic before or after the predefined quality characteristic. Therefore, in the quality control system, it is possible to arbitrarily define a plurality of quality characteristics in a multi-tiered manner.

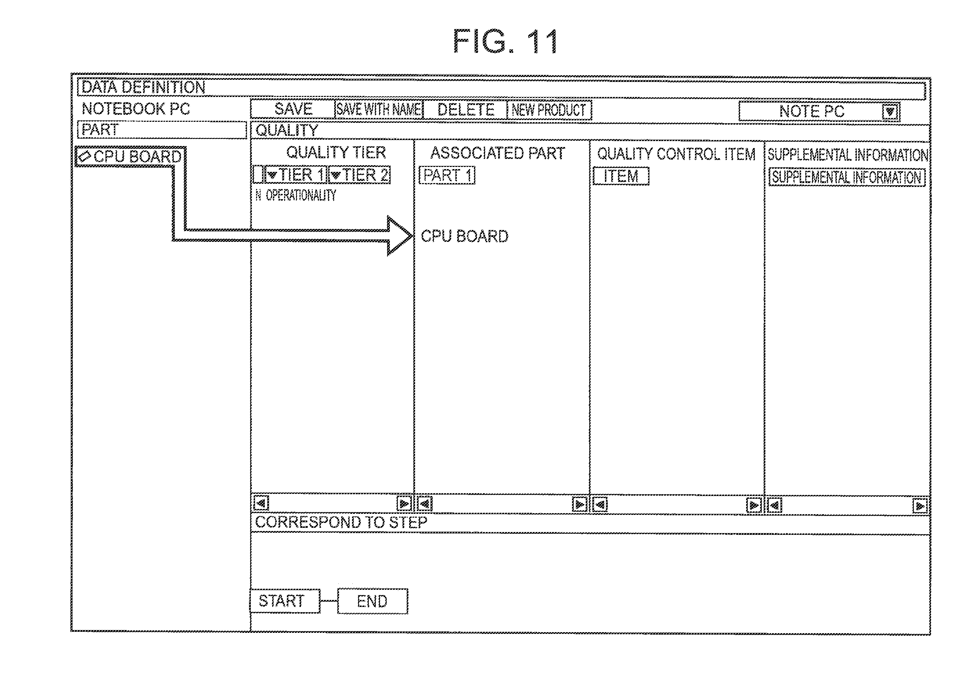

In the quality control system, parts associated with the registered quality characteristic are registered. That is, in the client device 20, as shown in Fig. 11, the quality control manager selects a part name associated with a single registered quality characteristic from among parts, which are displayed in the data display area 100_{Pd} as a part of the product structure tree, and drags and drops the selected part name into a row in the associated part table area. Fig. 11 illustrates a condition where a part "CPU board" is dragged and dropped. At this time, when a plurality of associated parts exists, the quality control manager may add the selected part name before and after the previously registered associated part. In the quality control system, such an operation is repeatedly executed. Therefore, the quality information (Q) and the product structure information (Pd) of QPP data of a company are associated with each other, and a chain (hereinafter, referred to as a Q-Pd chain), which connects the quality information and the product structure information, is formed as a kind of an internal information cooperation chain.

In the quality control system, attributes, which are attached to the quality characteristics or the associated parts, are registered and the values are input in the quality control item table area. Specifically, if the quality control manager right clicks a row in the quality control item table area to select an edition menu to be displayed, the client device 20 causes the quality control manage to input the name of a quality control item, for example, "temperature". If the quality control manager right clicks the name of a quality control item in the quality control item table area to select an addition menu to be displayed, the client device 20 adds attributes attached to quality control items "standard temperature value" and "temperature deviation", and causes the quality control manage to input the values. In the quality control system, such an operation is repeatedly executed. Therefore, a predetermined number of attributes starting with basic data, such as dimension, weight, and material are added as needed, and the quality characteristics are separated and registered in the form of detailed attribute data.

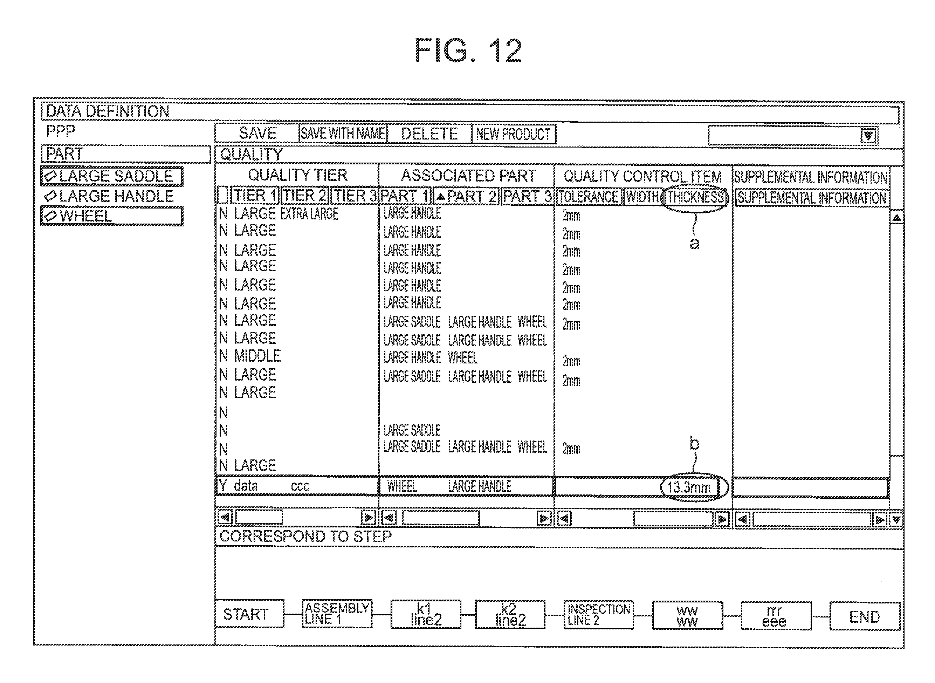

As described above, the quality control system enables to describe the quality control items by using the note of the 3D diagram information. Specifically, in order to input or edit the note of the 3D diagram information, if the quality control manager right clicks the name of a quality control item in the quality control item table area to select a 3D diagram information dialog menu to be displayed, the client device 20 displays a diagram display window for displaying the 3D diagram information on the display section 17 of the client device 20. If the quality control manager operates a 3D diagram information selection section of the diagram display window, the client device 20 causes the quality control manager to select a file of desired 3D diagram information, and displays the 3D diagram information of the selected file in the diagram display window. In order to newly add a note, the quality control manager clicks an addition button on the client device 20, and drags a note on the 3D diagram information displayed in the diagram display window from a place desired to add, to thereby extend a line of the note. Accordingly, the client device 20 displays a note edition panel on the display section 17. In order to edit an exiting node on the 3D diagram information, the quality control manager selects a note desired to edit on the 3D diagram information displayed in the diagram display window, and clicks an edition button. Accordingly, a note edition panel is displayed on the display section 17 of the client device 20. If the quality control manager inputs an attribute name and a value, for example, "thickness: 13.3 mm", and closes the note edition panel, as indicated by circles a and b in Fig. 12, the client device 20 adds the attribute name and the value described in the note to a row in the quality control item table area. At this time, when there is an existing attribute name described in the note, the client device 20 changes the value. Meanwhile, since there is no attribute name described in the note, the client device 20 adds the attribute name to the end of the row and sets the value. In the quality control system, such an operation is repeatedly executed, such that a quality control item is described by using a note on 3D diagram information.

The quality control system enables to describe a comment in the supplemental information table area as a memo. Specifically, if the quality control manager right clicks a row in the supplement information table area to select an edition menu to be displayed, the client device 20 causes the quality control manager to input a comment. In the quality control system, the supplemental information table area enables description of information not being explicitly definable as a quality control item, an address of a storage location of production result data, know-how being rarely quantitatively expressed, or a link of information not being clearly associated as a memo.

In this way, the quality control system is configured to define the quality information (Q) and form the Q-Pd chain. When predefined quality information is desired to be used for other parts, the quality control system may copy the quality information for each row.

In the quality control system, the production process information (Ps) is defined after the product structure information (Pd) and the quality information (Q) are defined. Specifically, in the data display area 100_{Ps} for displaying production process information, each step is displayed as a box, and a plurality of boxes is connected in parallel to each other, to thereby define the production process information. First, in the data display area 100_{Ps}, at the beginning, boxes indicating the start and end of the process are displayed. In order to add a step in the data display area 100_{Ps}, if the quality control manager right clicks a box desired to add a step from among the boxes displayed in the data display area 100_{Ps} to select an addition menu to be displayed, the client device 20 displays a popup screen for inputting line information or a step name on the display section 17 of the client device 20, and causes the quality control manager to input the line information or the step name. Accordingly, the client device 20 displays the box with the line information or the step name input in the data display area 100_{Ps}. If the quality control manager selects a desired box from among the boxes displayed in the data display area 100_{Ps}, the client device 20 may highlight the box to define the subordinate detailed steps of the step corresponding to the box. In this way, the quality control system connects the boxes with the line information or the step name input in parallel to each other, thereby displaying a series of production steps in the data display area 100_{Ps}.

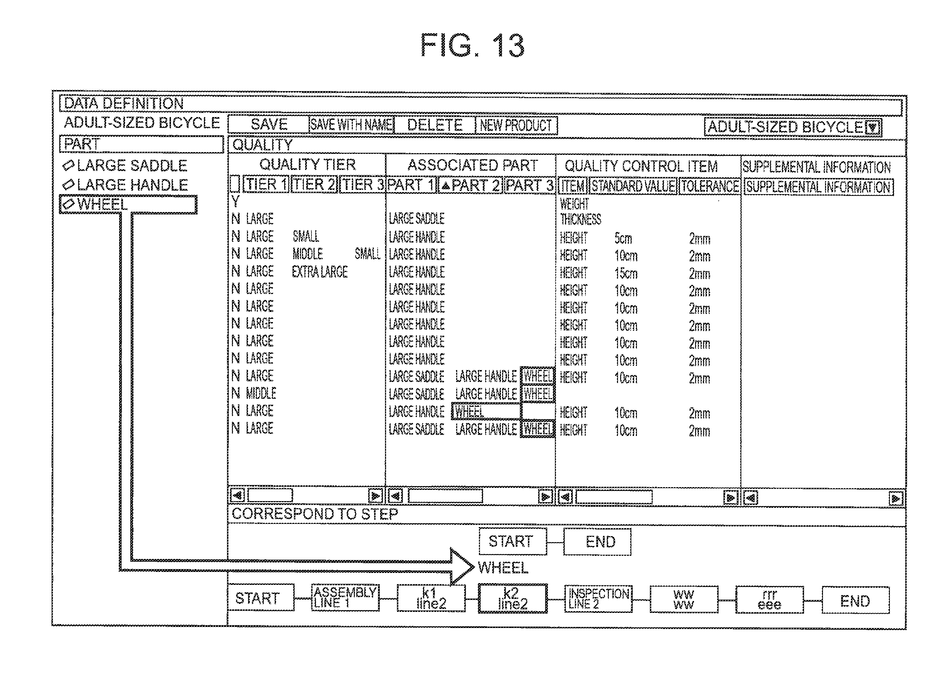

In the quality control system, parts associated with the individual steps defined in such a manner are registered. That is, as shown in Fig. 13, the quality control manager selects the name of a part associated with each step from among the parts displayed as a part of the product structure tree in the data display area 100_{Pd} on the client device 20, and drags and drops the selected part name into a box representing the corresponding step. Fig. 13 illustrates a condition where a part "wheel" is dragged and dropped into boxes representing a line name "line2" and a step name "k2". The quality control manager may register operation information or equipment information with respect to each step on the client device 20, and may associate each step with an operation or equipment assuring a predefined quality characteristic. In the quality control system, such an operation is repeatedly executed. Therefore, the product structure information (Pd) and the production process information (Ps) of QPP data in a company are associated with each other, and the quality information (Q) and the production process information (Ps) in QPP data of the company are associated with each other. In addition, a chain (hereinafter, referred to as a Pd-Ps chain), which connects the product structure information and the production process information, and a chain (hereinafter, referred to as a Q-Ps chain), which connects the quality information and the production process information, are formed as a kind of an internal information cooperation chain. The quality control system may also describe daily management or check method, such as operation check or equipment maintenance, for each step. Therefore, it is possible to manage, so-called 4M (Material, Machine, Man, Method) required daily management for quality assurance in a comprehensive manner.

In the quality control system, if the above-described procedure ends, the quality control manager clicks a save button of a tool bar provided in the data definition screen on the client device 20, and thus all kinds of set information are stored in the storage section 14 of the server 10 as a database. As a result, the quality control system enables definition of QPP data of a company. In the quality control system, each company performs definition of QPP data.

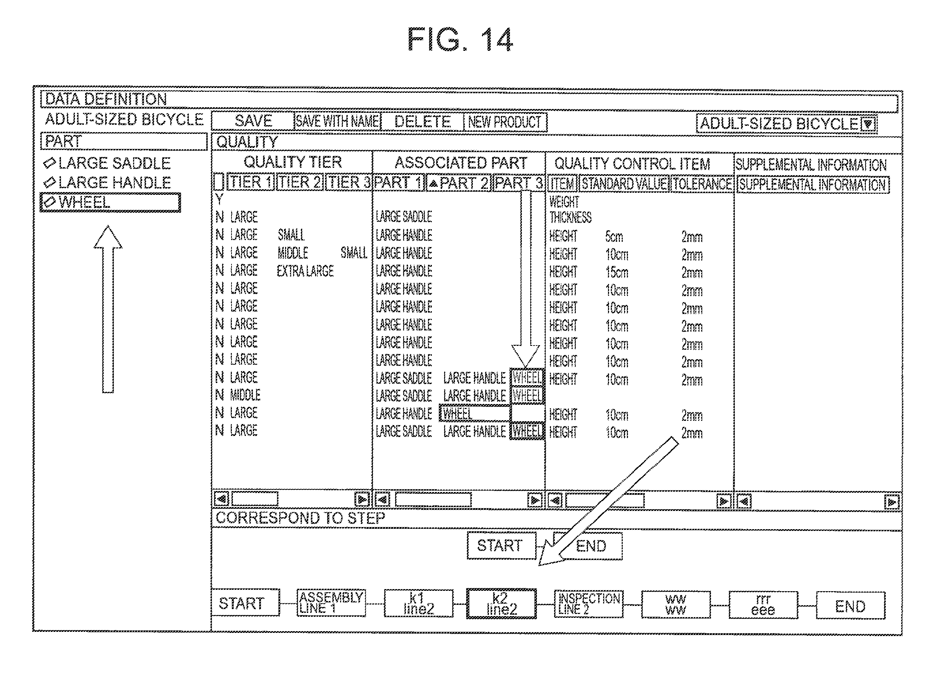

In the quality control system, with respect to QPP data of a company defined in the above-described manner, it is possible to confirm the association from any one of the quality information (Q), the product structure information (Pd), and the production process information (Ps). Specifically, as shown in Fig. 14, if the quality control manager selects a part displayed in the data display area 100_{Pd}, the client device 20 highlights all the quality control items and the production steps associated with the part, as indicated by an arrow in Fig. 14. Similarly, if quality control manager selects a row of quality information displayed in the data display area 100_{Q}, the client device 20 highlights all the parts and the production steps associated with the quality information. In addition, if the quality control manager selects a step displayed in the data display area 100_{Ps}, the client device 20 highlights all the parts and the quality control items associated with the step. As a result, in the quality control system, it is possible for the quality control manager to reliably and easily grasp the association of quality information (Q), product structure information (Pd), and production process information (Ps) of a company, that is, the structure of the internal information cooperation chain.

Next, definition of association of QPP data of a company and a customer company in Step S3 of Fig. 6, and integration of information in Step S4 will be described.

The quality control information having QPP data constructed in the individual companies is distributed in the companies in that state. The finished product manufacturer depends on the part supply manufacturers for most parts, and actually recognizes a risk of quality deterioration due to a part group, which supports the quality characteristics of the finished product. Like the finished product manufacturer, the part supply manufacturers, which supply the intermediate parts, recognize a potential risk of quality deterioration in incorporating the constituent elements, which are delivered from the subordinate part supply manufacturers. This tendency spreads and becomes severe due to globalization of part procurement caused by price reduction. In order to suppress the spread of the risk of quality deterioration, quality definition and sharing of quality control information beyond the bounds of the companies or factories are needed.

In the quality control system, in order to allow the companies to share the quality control information, first, the products or parts of the companies having a business connection, for example, a company and a customer company, are associated with each other, and a chain (hereinafter, referred to as a Pd-Pd chain), which connects the products or parts over the companies, is formed as a kind of an external information cooperation chain.

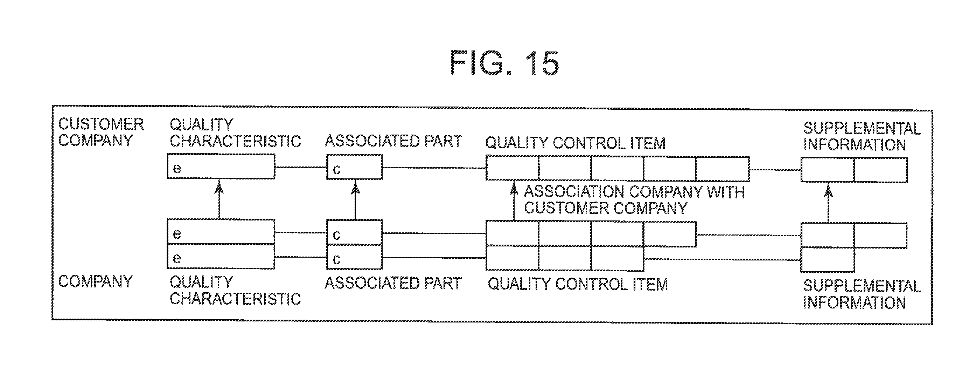

In the quality control system, the quality information of the company and the quality information of the customer company are selectively associated with each other, and all the quality information and the associated parts associated with the quality information of the company are automatically linked. Conceptually, in the quality control system, as shown in Fig. 15, the client device 20 imports QPP data of the customer company, and associates QPP data of the customer company with the quality characteristic, the associated part, the quality control item, and the supplemental information constituting QPP data of the company. At this time, in the quality control system, when a plurality of quality information of the company corresponds to single quality information of the customer company, if such association is repeatedly executed, it is possible to make clear indirect connection between the quality control items having unclear direct connection. In the quality control system, the quality information of the companies having business connection is associated in such a manner, and a quality control information chain (hereinafter, referred to as a Q-Q line), which connects the quality information of the companies, is formed as a kind of an external information cooperation chain.

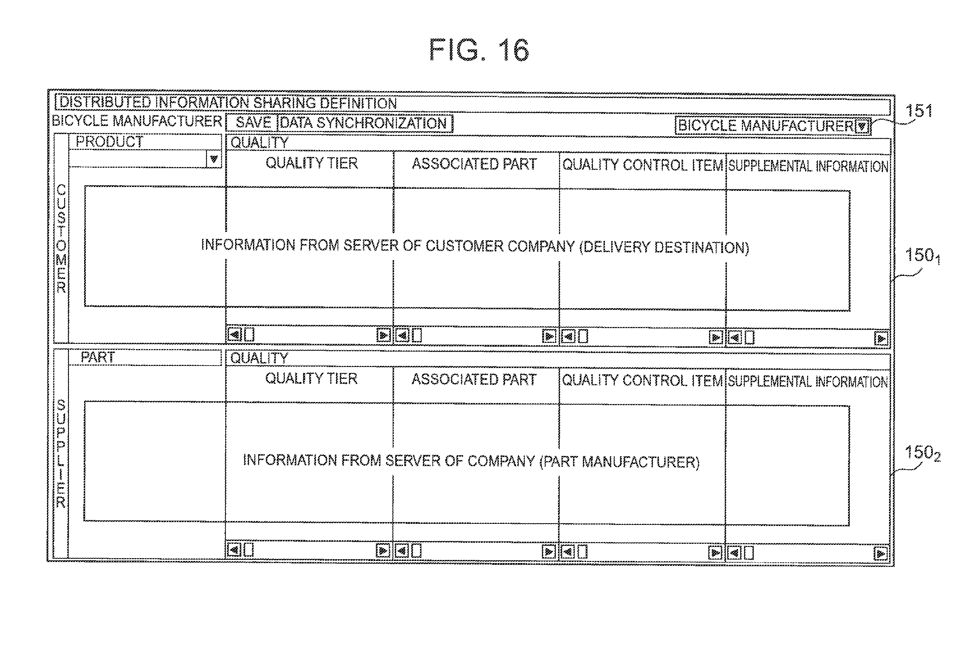

Specifically, in the quality control system, in order to associate information distributed in the companies, the quality control manager selects a distributed information sharing menu of a tool bar provided in the data definition screen on the client device 20. Accordingly, the client device 20 displays an execution screen on the display section 17 of the client device 20 as an inter-company information definition screen for association of QPP data of the companies. In the execution screen, as shown in Fig. 16, the data display area 100_{Q} and 100_{Pd} are individually divided into a customer company data display area 150₁, in which data downloaded and imported from the server 10 of the customer company (deliver destination) is displayed, and a company data display area 150₂, in which data imported from the server 10 is displayed. If the quality control manager operates a company selection button 151 provided in a tool bar to select a customer company not being associated, the client device 20 accesses the server 10 of the customer company, downloads data, and displays downloaded data in the customer company data display area 150₁. In this case, the client device 20 downloads only information regarding parts of the company as a supplier, which are permitted to be delivered to the customer company and displays the downloaded information in the customer company data display area 150₁.

In the quality control system, the product structure information (Pd) and quality information (Q) downloaded from the server 10 of the customer company are associated through the inter-company information definition screen.

Specifically, in order to associate the products or parts of the companies, if the quality control manager right clicks a product name or a part name displayed in the data display area 100_{Pd} of the customer company data display area 150₁ as a product structure tree to select a mapping menu to be displayed, the client device 20 displays a list of product names or parts of the company on the display section 17 of the client device 20, and causes the quality control manager to select a product or a part from the list, thereby associating the products or parts of the company and the customer company.

In the quality control system, such an operation is repeatedly executed for all the products or parts of the customer company. Therefore, the products or parts of the company associated with the products or parts of the customer company are displayed in the data display area 100_{Pd} of the company data display area 150₂. In this way, in the quality control system, the products or parts of the companies are associated with each other, and the Pd-Pd chain is formed.

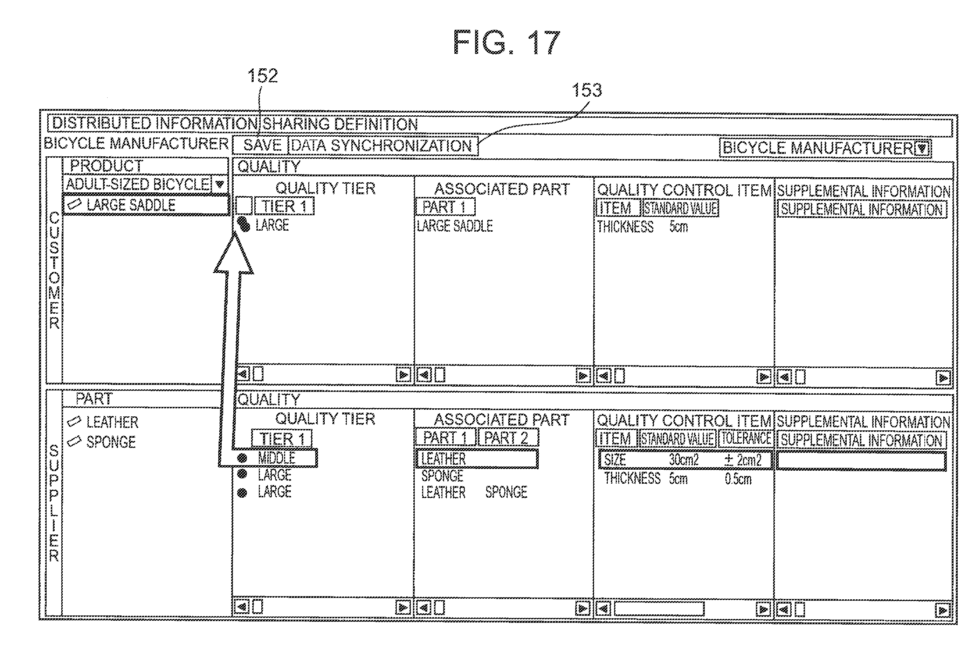

Meanwhile, in order to associate the quality information of the companies, as shown in Fig. 17, if the quality control manager drags and drops each item constituting the quality information displayed in the data display area 100_{Q} of the company data display area 150₂ to a corresponding one of the items constituting the quality information displayed in the data display area 100_{Q} of the customer company data display area 150₁, the client device 20 associates the quality information of the company with the quality information of the customer company. That is, the quality control manager executes such a drag-and-drop operation in order to define what item constituting the quality information of the company each item constituting the quality information of the customer company is managed as. Fig. 17 illustrates a condition where a quality characteristic "middle" in the company is associated with a quality characteristic "large" in the customer company.

In the quality control system, such an operation is repeatedly executed for all the items constituting the quality information of the company. Therefore, the association of the quality information in the companies is performed, and the Q-Q chain is formed. The association of the quality information, which is performed on a screen displayed on the display section 17 of the client device 20 is an operation of a minimum unit for forming the quality control information chain linking the companies.

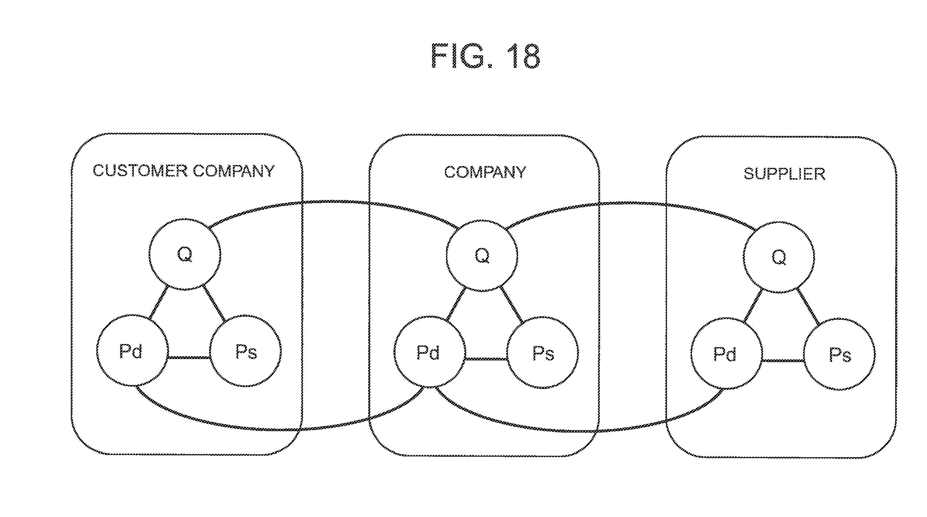

In the quality control system, if the above-described procedure ends, the quality control manager clicks a save button 152 of a tool bar provided in the inter-company information definition screen, which is displayed on the display section 17 of the client device 20, and thus all kinds of set information are stored in the storage section 14 of the server 10 in the company as a database. If the quality control manager clicks a synchronization button 153 of the tool bar provided in the inter-company information definition screen, the client device 20 accesses the server 10 of the customer company, transmits information stored in the database of the server 10 of the company to the server 10 of the customer company, and performs cross data update. Accordingly, in the quality control system, it is possible to define association of QPP data of the company and the customer company. In the quality control system, each company define the association of QPP data for the superordinate customer company or the subordinate part supply manufacturers, and thus it is possible to associate the quality information of all the parts constituting the finished product. Therefore, as shown in Fig. 18, it is possible to thoroughly form a quality control information chain linking the companies. In the quality control system, items being quantitatively defined from among the quality information are associated clearly as the specification, while qualitative information regarding the steps, such as assembly, inventory, lead time, and a degree of proficiency of a worker, is accumulated as needed in the format of description.

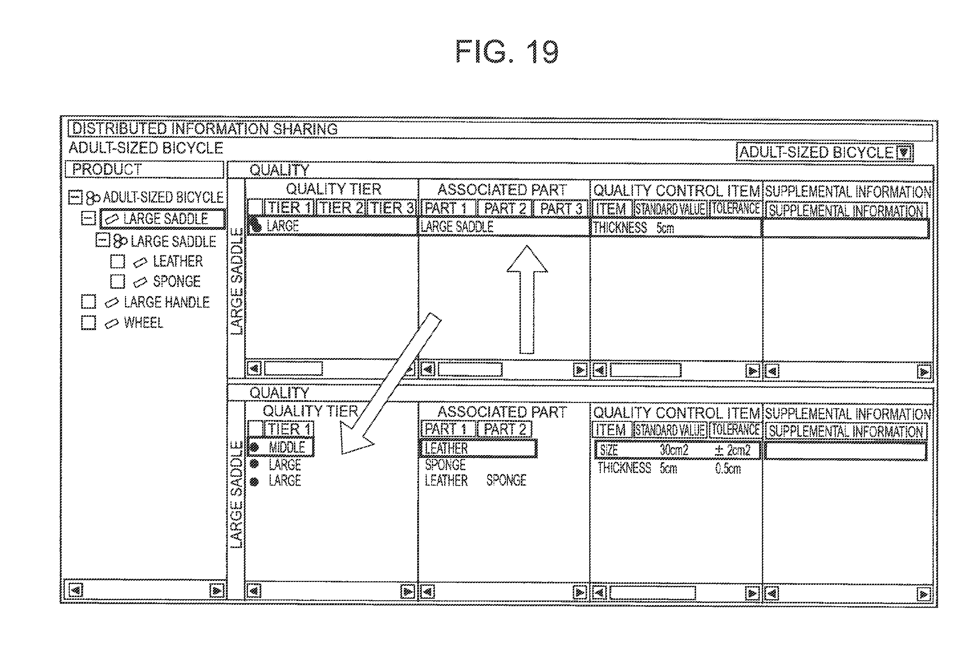

In the quality control system, it is possible to confirm the association of QPP data of the companies defined in such a manner. Specifically, if the quality control manager selects the distributed information sharing menu, and operates a selection button provided in the tool bar to select a product name or a part name desired to confirm, the client device 20 displays the names of parts of the company constituting the corresponding product or part in the data display area 100_{Pd}. If a part name desired to confirm is right clicked from among the part names displayed in the data display area 100_{Pd}, and an information request menu is selected, as shown in Fig. 19, the client device 20 displays part structure information obtained from the server 10 of another company in the data display area 100_{Pd} so as to be incorporated into the product structure tree. If the quality control manager selects an item from among the quality information of the company displayed in the data display area 100_{Q}, as indicated by an arrow in Fig. 19, the client device 20 highlights all quality information of another company associated with the item. In this case, if a plurality of quality information of another company corresponds to the item of the company, the client device 20 highlights a plurality of rows. Accordingly, in the quality control system, it is possible for the quality control manager to reliably and easily grasp the tiers of the product structure between the companies and the structure of the quality control information chain.

As such, the quality control system is a Web system based on the client device 20 that defines the quality control of the companies as the relations of quality, product, and production process, and allows the quality control manager to associate the quality control information of the companies using Internet, thereby forming the quality control information chain. The server 10 of a company connected to Internet functions as a connection point of the quality control information chain. The server 10 distributed in the quality control information chain functions as a distributed database, which collects the quality control information of the company, and a storage location of the quality control program. The quality control system is a distributed, cooperative system, which does not requires a manager who integratedly manages the entire system, but the quality control manager of the finished product manufacturer becomes a top supervisor because he/she observes the entire quality control information chain with the finished product at the top, and is responsible for quality of the finished product. The quality control system is based on the server 10 of the company, which is distributed and expanded, and the association of the quality control information of the companies is performed by the client device 20 of each company. The server 10 and the client device 20 are loosely connected to each other, and the association of QPP data of each company or the association of Q-Q and Pd-Pd of the companies are performed by the client device 20 through repetition of trial and error.

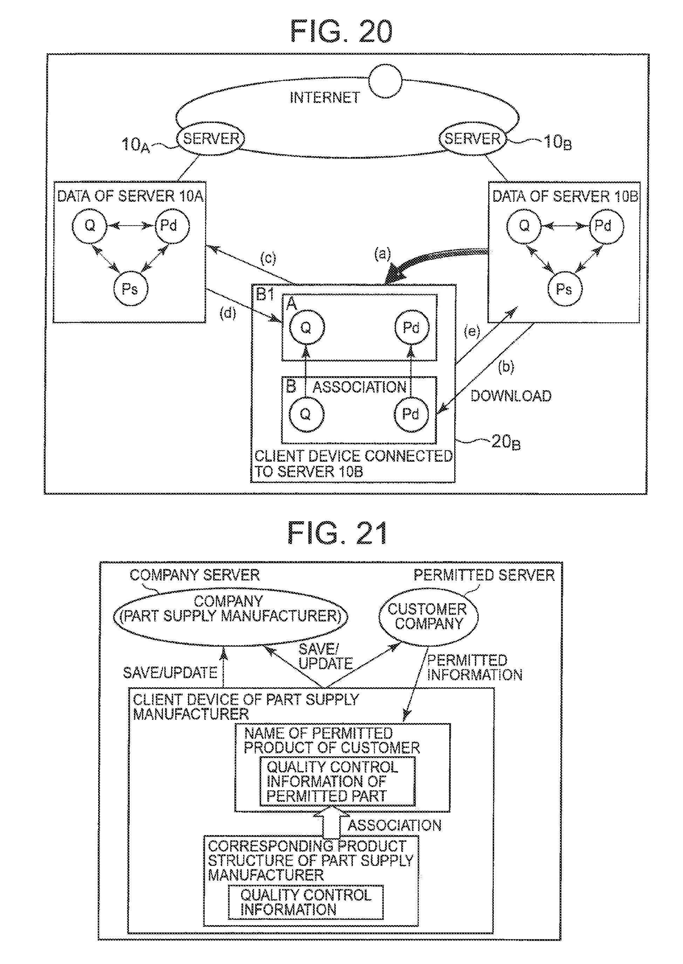

Fig. 20 illustrates a procedure of the association of Q-Q and Pd-Pd of the companies through the server 10 on Internet. In Fig. 20, a server 10_{B} is a server of a company, and a server 10_{A} is a server of a customer company. The servers 10_{A} and 10_{B} individually hold the quality control information of the corresponding company as a QPP data model.

First, in the quality control system, as shown in (a) of Fig. 20, the source code of the quality control program stored in the server 10_{B} is downloaded to the client device 20_{B} connected to the server 10_{B}, and the client device 20_{B} runs the quality control program and displays an execution screen on the display section 17 thereof. Next, in the quality control system, as shown in (b) of Fig. 20, the quality information (Q) and the product structure information (Pd) from among QPP data stored in the server 10_{B} are downloaded to the client device 20_{B} and displayed on the display section 17 of the client device 20_{B}. In addition, in the quality control system, as shown in (c) of Fig. 20, the client device 20_{B} accesses the server 10_{A} of the customer company through the server 10_{B}, downloads the quality information (Q) and the product structure information (Pd) from among QPP data stored in the server 10_{A}, as shown in (d) of Fig. 20, and displays the downloaded information on the display section 17 of the client device 20_{B}. The client device 20_{B} accesses the server 10_{A} in XML. That is, in the quality control system, all the client devices 20 establish communication in XML with respect to all the permitted servers 10. In the quality control system, the association of Q-Q and Pd-Pd is performed on the client device 20_{B}, and as shown in (e) of Fig. 20, the associated information is transmitted to the server 10_{B}. Then, QPP data of the server 10_{B} is updated and stored as a database. In the quality control system, as described above, the server 10_{B} may transmit information stored as a database to the server 10_{A} of the customer company, and may perform cross data update.

That is, in a quality control information cooperation processing by the quality control system, as shown in Fig. 21, the quality control manager of the part supply manufacturer selects a product from a list of products being permitted to be read in the server 10 of the customer company being permitted to be accessed on the client device 20, and selects a product name being permitted to be displayed. Thus, the quality control information is displayed on the display section 20 of the client device 20. Simultaneously, the client device 20 displays the quality control information of the company corresponding to the called quality control information of the customer company on the display section 17, newly associates, adds, and updates the control information, and stores information in the server 10 of the company as a database. The synchronization ensure cross update of data of the company and the customer company. In the quality control system, when the association is cancelled or changed, before data in the server 10 is updated, a cancel or change operation is executed on a screen, which is displayed on the display section 17 of the client device 20. Meanwhile, in regards to cancel or change after data in the server 10 is updated, only a quality control manager who is authorized to perform a cancel or change operation cancels or changes data, saves a change history, and performs version management.

The meaning of server cooperation in the quality control system will be finally described.

The quality control system constructs a quality control network beyond the bounds of the companies by cooperation of the servers 10 of the individual companies distributed on Internet, and is operated as follows. For example, when a part supply manufacturer as a supplier participates in a supply chain of a finished product subject to quality control by the quality control system, a quality control manager who accesses the server 10, which accumulates QPP data of the company for the parts supplied by the supplier, by using the client device 20 is registered as a manager of the quality control system. The registered server 10 sets an access authentication filter for determining what product or quality control item the customer company or a subordinate supplier as a source of constituent elements is permitted to read or perform cross update. It is also determined what product or quality control item stored in the server 10 of the customer company or the subordinate supplier the quality control manager as an operator is permitted to access. The authentication is updated in accordance with a supply relation or a part type each time a change occurs.

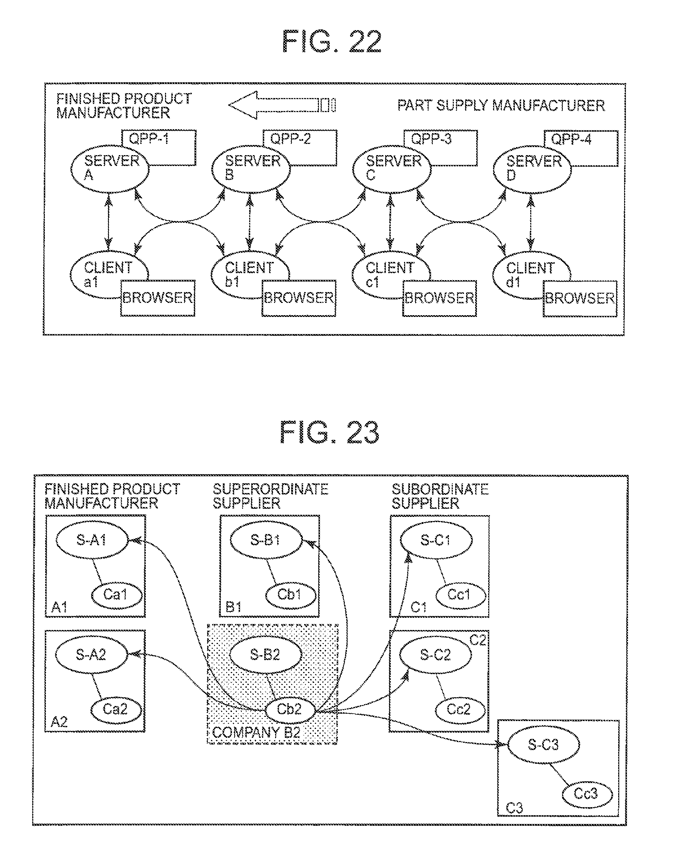

Fig. 22 illustrates the relation between servers A, B, C, and D and client devices provided in four companies. The server A is a server of a finished product manufacturer, and has a database QPP-1. A quality control manager performs input, update, and search through a browser screen to be displayed on a display section of a client device al. The servers B, C, and D are servers of part supply manufacturers, which deliver parts, and have databases QPP-2, QPP-3, and QPP-4, which are the same as that in the server A, respectively. The quality control managers individually have client devices a2, a3, and a4. The parts are supplied from the part supply manufacturer having the server D to the part supply manufacturer having the server B in a nested shape, and are finally supplied to the finished product manufacturer having the server A. In such a simple quality control system, the client device of each company should be connected to the servers of other companies, which cooperate with the corresponding company. In the quality control system, when the finished product manufacturer or a superordinate part supply manufacturer extensively searches quality information, it is necessary to maintain connection to the servers of all the companies having indirect procurement relationship with the finished product manufacturer or a superordinate part supply manufacturer. For this reason, the server cooperation by the quality control system should be based on a distributed, cooperative type according to a rich client technique that does not impose a load on the server even if such connection is maintained, and enables loose connection.

Fig. 23 illustrates a case where two companies (A1 and A2) are present as finished product manufacturers with respect to a part supply manufacturer (supplier) B2 having a complex part procurement relationship, one company (B1) is present as a part supply manufacturer, which has no direct procurement relationship and affects a finished product, and three companies (C1, C2, and C3) are present as subordinate part supply manufacturers. Fig. 23 illustrates the relation of the servers SA1, SA2, SB1, SC1, SC2, and SC3, to which a client device Cb2 of the part supply manufacturer B2 is connected. In the quality control system, the association by the client device including a trial of one-many association is performed. For this reason, loose connection and distribution/cooperation are said to be a server-client connection technique essential for implementation of the quality control system.

As described above, in the quality control system according to the embodiment of the invention, quality control of companies having different quality control in-house system is defined as the relations of quality information (Q), product structure information (Pd), and production process information (Ps), and a quality control manager associates quality control information of the companies by using Internet. The association of the quality control information of the companies makes it possible to form a quality control information chain linking the companies while efficiently employing a quality control method unique to each company. Therefore, in the quality control system, it is possible to easily grasp how much various parts constituting a finished product affect as quality, and to allow the companies to share the quality control information. As a result, it is possible to solve all the existing problems of quality control in the related art.

In the quality control system, a systematic QPP data model regarding quality control is accumulated, which makes it possible to reuse QPP data of an existing product with respect to a new product. That is, the quality control system functions as a tool of accumulation, sharing, and cooperative adjustment of know-how (quality, product, and process) for maintaining and improving the quality level globally.

The quality control system is advantageously applied to the fields, such as vehicles, electrical products, electronic devices, semiconductors, medicines, foods, airplanes, vessels, rockets, and application software, which produce products by combining parts or materials, and have a problem in transparency for quality control due to dependency of the quality level on the external procurement, regardless of whether a finished product is visible or invisible. In other words, the quality control system is a new system using a Web infrastructure that may be used in all the industries, which face a potential threat of a problem in quality control in a present competitive market.

The quality control system may be utilized in sharing of the knowledge, in addition to inter-company sharing of the quality standard or quality control items, and has the following advantages.

First, sharing of the knowledge by addition of detailed information to the QPP data model is exemplified.

The structure of the QPP data model is utilized for process control in an actual production line scene. In each process, information regarding equipment or tools used in the scene, or workers who engage in the scene is accumulated as primary information. Information regarding equipment may include auxiliary information, such as assets period, maintenance time, repair manual, operation manual, and the like. Information regarding the production process includes various attributes, such as operation name, time, part name, and the like.

In the quality control system, once the attributes are input and an operation starts, it becomes possible to search information of quality, operation, and equipment regarding a corresponding step on the basis of only the QPP data model. In the quality control system, such information is accumulated in association with a problem in the production line. That is, in the quality control system, quality problems are accumulated in association with quality control items, problems regarding operations are accumulated in association with operation information of individual steps, and troubles of equipment are associated with information of equipment. Therefore, in the quality control system, even if there is an operation change from one step to another step, when problems of parts occur, the problems are accumulated in association with the parts, and thus the problems are displayed with respect to the changed step. The same processing may be performed on equipment.

As such, in the quality control system, the problems are accumulated in the QPP data model, and thus it becomes possible to search the quality problems and the steps in the production line. In addition, in the quality control system, the causes of the quality problems are analyzed, and the problems are associated with events, such as product, operation, or equipment, which causes the problems. Therefore, it is possible to associate the quality problems with the products and the steps and to suppress recurrence of the problems.

In general, the problems regarding the products are described in the design manuals of the products, and the problems regarding the steps are described in the operation manuals of the steps and individually operated. In contrast, in the quality control system, such problems are incorporated into the QPP data model, and thus a designer of a product may operate the client device 20 to search problems related to the product. On the other hand, an operator of a line may operate the client device 20 to search problems even if the problems are caused by the products. In addition, in the quality control system, predicted problems in design are input as the product attributes, and thus an incoming designer may utilize the predicted problems as items regarding prediction and solution of problematic points from among the quality control items.

As such, in the quality control system, standard information regarding quality are accumulated as the QPP data model, and detailed information regarding quality information (Q), product structure information (Pd), and production process information (Ps) are added or associated with each other. Therefore, in design, manufacture, and use of the products, it is possible to systematically maintain association of problems, causes, and solutions.

Second, sharing of knowledge by collection and analysis of quality control information of the companies is exemplified.

In the quality control system, if a functional problem may be associated with one quality control item, it becomes possible to rapidly grasp with reference to a list of associated parts what part group causes the functional problem. In addition, in the quality control system, when a possibility is found that the cause of the problem is dimension precision, it becomes possible to rapidly grasp parts related to the dimension precision. In the quality control system, on the basis of the name of a part supply manufacturer (supplier), it becomes possible to grasp a breakdown quality control item from the supplier. Accordingly, in the quality control system, it becomes possible to rapidly grasp information regarding precision information of a quality control item to be provided, or the tendency of measurement information and information regarding which part of which supplier has a change involved in the problem. To this end, in the quality control system, if the suppliers temporarily connect a chain for quality with the quality control items, the finished product manufacturer collects and takes statistics associated quality control information from a plurality of suppliers as needed, and rapidly grasp what change causes the problem.

For such investigation, concerned parties immediately have a meeting, examine, collect data later, and reexamine. If it is found that data of a part is lacking, the concerned parties have a meeting again and match data, thereby solving the problem. It takes a long period to solve the problems, and during this period, defective products or parts are produced and delivered to the consumers.

in contrast, the QPP data model has a structure that enables a flexible search with respect to in-house information of a company and information of the suppliers. For example, when the quality problem is caused by a manufacturing process of a part of a supplier, as the search result based on the association of the quality control items, a countermeasure is described in a recurrent prevention manual with respect to the manufacturing process of the part of the supplier. In this case, in the quality control system, the QPP data model of the supplier is searched on the basis of the QPP data model of the company, and thus an operation up to recurrence prevention management through the quality control information chain becomes possible over the entire chain.

Third, utilization of knowledge of manufacturing of a product developer is exemplified.

If necessary, a product developer may design with the process problems or quality problems of the suppliers. In the quality control system, quality measurement data in the production line may be associated the quality control items and accumulated. In the quality control system, a designer reads accumulated data, to thereby determine whether or not a product is produced within the standards of the quality control items. In the quality control system, it is possible to quantitatively grasp the process capability of the production line, and to impart accurate knowledge to an examination operation during design. In particular, according to the quality control system, the quality control information is opened, and thus an operation is conducted with transparency.

As such, the QPP data model has a data structure in which quality control, product condition, process conditions, equipment conditions, and the causes and countermeasures with respect to the problems regarding product quality, process, and equipment in the production line are accumulated.

Fourth, claim feedback from the market is exemplified.

The quality control system is advantageously used with respect to a problem in use of a product in the marker. The problem in the market takes the form of a complaint from a user. When the quality control system is installed at a store, a received problem is added to the quality control items of the QPP data model. Accordingly, the problem that is noticed by the user incurs is connected as QPP data through the network NT. At this time, even if there are a variety of problems, the problems are associated with some kinds of quality control items. Therefore, the finished product manufacturer or the supplier is able to grasp what problem occurs and what part the problem is associated with.

In the quality control system, the problems of other products, which use the same part, are comparatively analyzed. Therefore, it becomes possible to predict the extent of the problems or future expansibility.

In the related art, such problems are an aggregate in a product unit or a store unit, and it takes a long period to solve the problems.

In contrast, in the quality control system, a problem is initially directly associated with a quality control item and registered. Therefore, it is possible to perform a search for the companies, products, equipment, and workers associated with the quality control item as needed. This may contribute to rapid cause investigation through a wide network of many experts in an initial investigation stage. Unlike to the related art method, in which the problem, which is noticed by the user, is sequentially sent to the associated companies or departments, and the cause is investigated while making a "guess", such a method enables clear and rapid cause investigation, and also enables accurate cause investigation on the basis of knowledge or judgment of many technicians.

Fifth, quality confirmation of a customer company in a supplier is exemplified.

In the quality control system, it becomes possible for a supplier to rapidly and broadly grasp what kind of problem occurs with respect to a part of the company. In many cases, a part becomes a constituent element of different products of a plurality of companies. Accordingly, it is necessary for the supplier to recognize that the problem is associated with all the products, which use the part, as well as a product, in which the problem is pointed out. For this reason, in the related art, it takes a lot of time to check with the individual companies and to collect information.

In contrast, in the quality control system, if one part is designated, it is possible to easily search the name of a product, which uses the part, the problem in the product, which is noticed by the user, and the extent of the problem over a plurality of companies. Therefore, the quality control system enables a company to take a prompt action as social responsibility, and ensures that the company be thought of as a company which is able to uphold social responsibility.

In the quality control system, a quality problem in a process on a part supplier side occurs, and a substitute is delivered, it is possible to grasp the quality state and to watch the status the validity of the substitute. As such, the quality control system is able to be utilized in a two-way manner as a scene operation tool beyond the bounds of the companies.

In general, a problem is described by a set of cause and countermeasure. As the causes of the quality problems, product design, manufacturing problems, and problems in use are exemplified. As the countermeasures, design countermeasures, manufacturing countermeasures, and precautions of usage may be exemplified. The problems or the causes are typically classified and accumulated by design problem, manufacturing problem, and problem in use. Actually, however, in regards to all the design problems, manufacturing problems, and problems in use, there are many cases where one problem is associated with a plurality of classified causes, and a plurality of countermeasures in design, manufacturing, and use is required. For this reason, in order to accurately accumulate accurate information and to perform quality control, such as recurrence prevention, it is necessary to construct a data structure in which quality information, product structure information, and production process information are associated, like the QPP data model. In case of existing data, the product structure information and the production process information are separated from each other, and the companies have different in-house systems.

For the sake of statistical advancement in capability of product design, it is necessary to share the problems beyond the bound of a company. From this standpoint, the QPP data model corresponds to one being defined as a new business protocol.

Sixth, accumulation of techniques is exemplified.

Techniques consequently involve in target functions or performance. The techniques implement the functions or performance by using logics or the natural laws. For example, information of equipment is used as information regarding a step of the production line, but the equipment is installed in order to process a part. In the quality control system, information regarding processing conditions or details and processing precision may be accumulated in the subordinate data layers of the QPP data model. Accordingly, in the quality control system, it becomes possible to grasp what part is manufactured, what equipment is used for the part, what processing the equipment is used for, and how precision the part is processed. Therefore, in the quality control system, it becomes possible to specify what processing equipment from among a plurality of processing equipment is an immediate cause of the problem of the final quality control item. In the quality control system, it becomes possible to grasp the capability of equipment. In the quality control system, when new equipment is introduced, the capability of equipment is accumulated. This also involves in primitive accumulation of techniques, for example, what technique is used, what processing the technique is used for, and what product or part the processing is used to process. In the quality control system, it becomes possible to explain how quality is achieved, what step the quality is achieved in, what equipment or processing method is used, and what condition the quality is achieved.

Accumulation of engineering knowledge and techniques in a company is utilized for a unique product of the company. The unique product is manufactured because materials, process, equipment, an operation and maintenance control method, or detailed conditions are satisfied. The combination is a unique technique of the company, that is, know-how. The QPP data model is a basic data model for information utilization, and accordingly it is possible to acquire past knowledge or techniques by copying the QPP data model. In addition, it is possible to implement a change to a growth-type work style in which a new one is added to the acquired knowledge or techniques, or the acquired knowledge or techniques are corrected.

The invention is not limited to the foregoing embodiment. For example, although in the foregoing embodiment, a case where a company is used as an activity unit has been described, the invention may be applied to a case where a department of a company is used as an activity unit. In this case, the above company becomes one department, and the customer company becomes another department.

In the foregoing embodiment, a product or a part is used as an object subject to quality control, and the invention is applied to design and production of the product or the part has been described. However, the invention may be applied to the phases of the product lift cycle including sale, maintenance, and repair, as well as design and production. In addition, the invention may be applied to services. In this case, a service is used as an object subject to quality control, and the invention may be applied to the phases of service provision.

As such, the invention may be appropriately modified without departing from the spirit of the invention.

## Claims

1. A quality control system that controls quality of an object subject to quality control, the system comprising:
a plurality of server devices that is individually provided in a plurality of activity units, which has different quality control systems and performs social activities, and is interconnected through a network; and
a plurality of client devices that is terminals provided in each activity unit and is operated by quality control managers belonging to the corresponding activity unit,
wherein the server devices and the client devices provided in each activity unit are loosely connected to each other,
each of the client devices includes:
a display unit that displays various kinds of information;
a first association unit that, in accordance with manipulation through a screen displayed on the display unit, by a quality control manager belonging to one activity unit in which the corresponding client device is provided, defines and associates quality information including quality control items of the object subject to quality control, structure information regarding the structure of the object subject to quality control, and process information regarding a process for the object subject to quality control in the one activity unit;
a second association unit that, in accordance with an operation by the quality control manager belonging to the one activity unit through the screen displayed on the display unit, imports quality information and structure information defined by the first association unit of another client device provided in another activity unit and stored in the server device connected to another client device as a database, in another activity unit, and associates the quality information and the structure information with the quality information and the structure information in the one activity unit, respectively;
a control unit that, in accordance with an operation by the quality control manager belonging to the one activity unit through the screen displayed on the display unit, controls the display unit to visually display an internal information cooperation chain indicating a relation between the quality information, the structure information, and the process information in the one activity unit defined and associated by the first association unit, and an external information cooperation chain indicating a relation between the quality information and the structure information in another activity unit and the quality information and the structure information in the one activity unit; and
the server device includes a storage unit that stores, as a database, a data group associated by the first association unit and the second association unit in the client device loosely connected to the server device.

2. The system according to claim 1,
wherein each activity unit is a company or a department,
the object subject to quality control is a product and/or a part produced by the company or the department,
the quality information is quality information including quality control items of the product and/or the part produced by one company,
the structure information is product structure information regarding constituent elements of the product and/or the part produced by the one company, and
the process information is production process information regarding a production process for the product and/or the part produced by the one company.

3. The system according to claim 1 or 2,
wherein the first association unit controls the display unit to display a first definition screen for definition and association of the quality information, the structure information, and the process information in the one activity unit, and
the first definition screen has three data display areas corresponding to the quality information, the structure information, and the process information.

4. The system according to claim 3,
wherein, in accordance with an operation by the quality control manager belonging to the one activity unit through the first definition screen displayed on the display unit, the first association unit defines information regarding the object subject to quality control and information regarding elements constituting the object subject to quality control in the one activity unit, and displays a structure tree arranging the defined elements constituting the object subject to quality control in a tree, in the data display area corresponding to the structure information.

5. The system according to claim 4,
wherein the data display area corresponding to the quality information is divided into four table areas including a quality tier table area describing quality characteristics in a multi-tiered manner, an associated element table area describing associated elements corresponding to the quality characteristics, a quality control item table area describing attributes attached to the quality characteristics and the associated elements, and a supplemental information table area describing supplemental information, and
in accordance with an operation by the quality control manager belonging to the one activity unit through the first definition screen displayed on the display unit, the first association unit defines quality characteristics, associated elements corresponding to the quality characteristics, attributes attached to the quality characteristics and the associated elements, and supplemental information in the one activity unit, and displays the quality characteristics, the associated elements corresponding to the quality characteristics, the attributes attached to the quality characteristics and the associated elements, and the supplemental information over the four table areas of the data display area corresponding to the quality information.

6. The system according to claim 5,
wherein, in accordance with an operation by the quality control manager belonging to the one activity unit to select a desired element from among elements to be displayed on the display unit as a part of the structure tree, the first association unit defines elements associated with the quality characteristic as the associated elements, and associates the quality information and the structure information in the one activity unit.

7. The system according to claim 6,
wherein, in accordance with an operation by the quality control manager belonging to the one activity unit through the first definition screen displayed on the display unit, the first association unit defines individual steps in the one activity unit, and connects boxes indicating the individual steps for the object subject, to quality control in the data display area corresponding to the process information to display a series of steps.

8. The system according to claim 7,
wherein, in accordance with an operation by the quality control manager belonging to the one activity unit to select a desired element from among elements to be displayed on the display unit as a part of the structure tree, the first association unit defines elements associated with the individual steps, associates the structure information and the process information in the one activity unit, and associates the quality information and the process information in the one activity unit.

9. The system according to claim 3,
wherein the second association unit controls the display unit to display a second definition screen for association of the quality information and the structure information in the another activity unit, and the quality information and the structure information in the one activity unit, respectively, and
the second definition screen is formed by dividing each of the data display areas corresponding to the quality information and the structure information into a data display area displaying data imported from the server device in the another activity unit, and a data display area displaying data imported from the server device in the one activity unit.

10. The system according to claim 9,
wherein, in accordance with an operation by the quality control manager belonging to the one activity unit through the second definition screen displayed on the display unit, the second association unit associates elements constituting the object subject to quality control in the another activity unit displayed in a tree in the data display area displaying data imported from the server device in the another activity unit, with elements constituting object subject to quality control in the one activity unit displayed in a tree in the data display area displaying data imported from the server device in the one activity unit, to thereby associate the structure information in the another activity unit and the structure information in the one activity unit.

11. The system according to claim 9,
wherein, in accordance with an operation by the quality control manager belonging to the one activity unit through the second definition screen displayed on the display unit, the second association unit associates items constituting the quality information in the another activity unit displayed in the data display area displaying data imported from the server device in the another activity unit, with items constituting the quality information in the one activity unit displayed in the data display area displaying data imported from the server device in the one activity unit, to thereby associate the quality information in the another activity unit and the quality information in the one activity unit.

12. A quality control program that uses a server device employed by a quality control system for controlling quality of an object subject to quality control and is executed by a computer as a client device connected to the server device,
wherein the quality control system includes
a plurality of server devices that is individually provided in a plurality of activity units, which has different quality control systems and performs social activities, and is interconnected through a network, and
a plurality of client devices that are terminals provided in each activity unit and is operated by a quality control manager belonging to the corresponding activity unit,
the server device and the client devices provided in each activity unit are loosely connected to each other, and
the program causes the computer to function as:
a first association unit that, in accordance with an operation by a quality control manager belonging to one activity unit, in which a corresponding client device is provided, through a screen displayed on a display unit, defines and associates quality information including quality control items of the object subject to quality control, structure information regarding the structure of the object subject to quality control, and process information regarding a process for the object subject to quality control in the one activity unit;
a second association unit that, in accordance with an operation by the quality control manager belonging to the one activity unit through the screen displayed on the display unit, imports quality information and structure information, which are defined by a first association unit of another client device provided in another activity unit and stored in a server device connected to another client device as a database, in another activity unit, and associates the quality information and the structure information with the quality information and the structure information in the one activity unit, respectively; and
a control unit that, in accordance with an operation by the quality control manager belonging to the one activity unit through the screen displayed on the display unit, controls the display unit to visually display an internal information cooperation chain indicating a relation between the quality information, the structure information, and the process information in the one activity unit defined and associated by the first association unit, and an external information cooperation chain indicating a relation between the quality information and the structure information in another activity unit and the quality information and the structure information in the one activity unit.

13. The program according to claim 12,
wherein the client device downloads the quality control program from the server device connected thereto and executes the quality control program.

14. A client device that is employed by a quality control system for controlling quality of an object subject to quality control,
wherein the quality control system includes
a plurality of server devices that is individually provided in a plurality of activity units, which has different quality control systems and performs social activities, and is interconnected through a network, and
a plurality of client devices that is terminals provided in each activity unit and is operated by a quality control manager belonging to the corresponding activity unit,
the server device and the client devices provided in each activity unit are loosely connected to each other, and
the client device comprising:
a display unit that displays various kinds of information;
a first association unit that, in accordance with an operation by a quality control manager belonging to one activity unit, in which the client device is provided, through a screen displayed on the display unit, defines and associates quality information including quality control items of the object subject to quality control, structure information regarding the structure of the object subject to quality control, and process information regarding a process for the object subject to quality control in the one activity unit;
a second association unit that, in accordance with an operation by the quality control manager belonging to the one activity unit through the screen displayed on the display unit, imports quality information and structure information, which are defined by a first association unit of another client device provided in another activity unit and stored in a server device connected to another client device as a database, in another activity unit, and associates the quality information and the structure information with the quality information and the structure information in the one activity unit, respectively; and
a control unit that, in accordance with an operation by the quality control manager belonging to the one activity unit through the screen displayed on the display unit, controls the display unit to visually display an internal information cooperation chain indicating a relation between the quality information, the structure information, and the process information in the one activity unit defined and associated by the first association unit, and an external information cooperation chain indicating a relation between the quality information and the structure information in another activity unit and the quality information and the structure information in the one activity unit.
